# EUROPEAN PATENT APPLICATION

(11) **EP 2 913 753 A1**
(43) Date of publication of application: **02.09.2015**
(21) Application number: 15155212.2
(22) Date of filing: 16.02.2015
(51) Int. Cl.: G06F 9/54, H04L 12/24

(54) **Transmission terminal, transmission system, transmission method, and carrier means**

(30) Priority: 28.02.2014 JP 2014038646
(71) Applicant: Ricoh Company, Ltd., Tokyo 143-8555 (JP)
(72) Inventor: Nagase, Tatsuya, Tokyo, 143-8555 (JP); Asai, Takahiro, Tokyo, 143-8555 (JP)
(74) Representative: Schwabe - Sandmair - Marx

(57) **Abstract**

A transmission terminal (10, 20) capable of communicating with a counterpart transmission terminal (10, 20) stores in a memory (1000) first data type information indicating one or more data types that can be processed by the transmission terminal (10, 20), receives second data type information indicating one or more data types that can be processed by a candidate counterpart terminal (10, 20) through a network (2), determines one or more common data types that are common to the first data type information and the second data type information to obtain the common data types of the candidate counterpart terminal (10, 20) that can be processed by the transmission terminal (10, 20), and displays on a display (120, 3) the common data types of the candidate counterpart terminal (10, 20) differently than other data types of the candidate counterpart terminal (10, 20) that cannot be processed by the transmission terminal (10, 20),

## Description

### BACKGROUND

### Technical Field

The present invention generally relates to communicating with a counterpart terminal.

### Description of the Related Art

The communication systems are widely used, which allow communication between remotely located sites through a communication network such as the Internet. As described in Japanese Patent Application Publication No. JP-2012-075073-A, one example of such communication systems is a videoconference system, in which a communication terminal converts an image and sounds that are captured at one site into image data and sound data, respectively, and transmits the image data and the sound data to a counterpart communication terminal at the other site via a server. The counterpart communication terminal displays an image based on the received image data on a display, while outputting sounds based on the received sound data through a speaker.

As described in Japanese Patent Application Publication No. JP-2013-131204-A, The other example of communication systems uses an electronic whiteboard. The electronic whiteboard displays a background image or a user interface (UI) image on a display, while allowing a user to draw a stroke image on the background image or the UI image such as characters, numerals or figures. The electronic whiteboard electrically converts drawings, which are drawn by the user with an electronic pen or the user's hand, to coordinate data. The electronic whiteboard at one site may transmit the coordinate data to a counterpart electronic whiteboard at the other site via a server. The counterpart electronic whiteboard reproduces a stroke image based on the coordinate data for display. This electronic whiteboard may be used with the communication terminal in the above-described videoconference system to facilitate communication among different sites.

### SUMMARY

Example embodiments of the present invention include a transmission terminal capable of communicating with a counterpart transmission terminal. The transmission terminal stores, in a memory, first data type information indicating one or more data types that can be processed by the transmission terminal. The transmission terminal receives second data type information indicating one or more data types that can be processed by a candidate counterpart terminal through a network, and determines one or more common data types that are common to the first data type information and the second data type information to obtain the common data types of the candidate counterpart terminal that can be processed by the transmission terminal. Based on determination, the transmission terminal displays, on a display, the common data types of the candidate counterpart terminal differently than other data types of the candidate counterpart terminal that cannot be processed by the transmission terminal.

Example embodiments of the present invention include a transmission system including the above-described transmission terminal, and a relay system that manages and sends the second type information to the transmission terminal, the relay system that manages the second type information for each one of a plurality of transmission terminals, a method performed by the transmission terminal, a method performed by the relay system, and a control program that causes the transmission terminal or the relay system to perform such method.

With this information regarding the common data types, the user at the transmission terminal can instantly recognize the type of data that can be processed by the counterpart terminal, before starting communication with the counterpart terminal.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a schematic block diagram illustrating a transmission system according to an example embodiment of the present invention;
FIG. 2 is an illustration for explaining transmission or reception of various data such as image data, sound data, and various management information in the transmission system of FIG. 1;
FIGs. 3A to 3C (FIG. 3) are an illustration for explaining quality of image data in FIG. 2;
FIG. 4 is a view illustrating an outer appearance of a communication terminal of the transmission system of FIG. 1;
FIG. 5 is a view illustrating an outer appearance of an electronic whiteboard of the transmission system of FIG. 1;
FIG. 6 is a schematic block diagram illustrating a hardware structure of the communication terminal of FIG. 4;
FIG. 7 is a schematic block diagram illustrating a hardware structure of the electronic whiteboard of FIG. 5;
FIG. 8 is a schematic block diagram illustrating a hardware structure of any one of a transmission control system, program providing system, and maintenance system of the transmission system of FIG. 1;
FIG. 9 is a schematic block diagram illustrating a functional structure of the communication terminal of FIG. 4;
FIG. 10 is an illustration of a visual information management table;
FIG. 11 is a schematic block diagram illustrating a functional structure of the electronic whiteboard of FIG. 5;
FIG. 12 is an illustration of various image layers in a superimposed image;
FIG. 13 is an example data structure of page data;
FIG. 14 is an example data structure of stroke data;
FIG. 15 is an example data structure of coordinate arrangement data;
FIG. 16 is an example data structure of media data;
FIG. 17 is a schematic block diagram illustrating a functional structure of the transmission control system of the transmission system of FIG. 1;
FIG. 18 is an example data structure of an authentication management table;
FIG. 19 is an example data structure of a terminal management table;
FIG. 20 is an example data structure of a candidate list management table;
FIG. 21 is an example data structure of a session management table;
FIG. 22 is a data sequence diagram illustrating operation of preparing for transmission or reception of contents data among a plurality of transmission terminals;
FIG. 23 is a flowchart illustrating operation of generating a candidate list;
FIG. 24 is an illustration of an example candidate list screen;
FIG. 25 is a data sequence diagram illustrating operation of starting transmission or reception of contents data to or from a counterpart terminal that is selected;
FIG. 26 is an illustration of an example candidate list screen;
FIG. 27 is a data sequence diagram illustrating operation of displaying a communication start screen; and
FIG. 28 is an illustration of an example communication start screen.

The accompanying drawings are intended to depict example embodiments of the present invention and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that operate in a similar manner.

In the following description, illustrative embodiments will be described with reference to acts and symbolic representations of operations (e.g., in the form of flowcharts) that may be implemented as program modules or functional processes including routines, programs, objects, components, data structures, etc., that perform particular tasks or implement particular abstract data types and may be implemented using existing hardware at existing network elements or control nodes. Such existing hardware may include one or more Central Processing Units (CPUs), digital signal processors (DSPs), application-specific-integrated-circuits, field programmable gate arrays (FPGAs) computers or the like. These terms in general may be referred to as processors.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

Referring now to the drawings, a transmission system 1 is explained according to an example embodiment of the present invention.

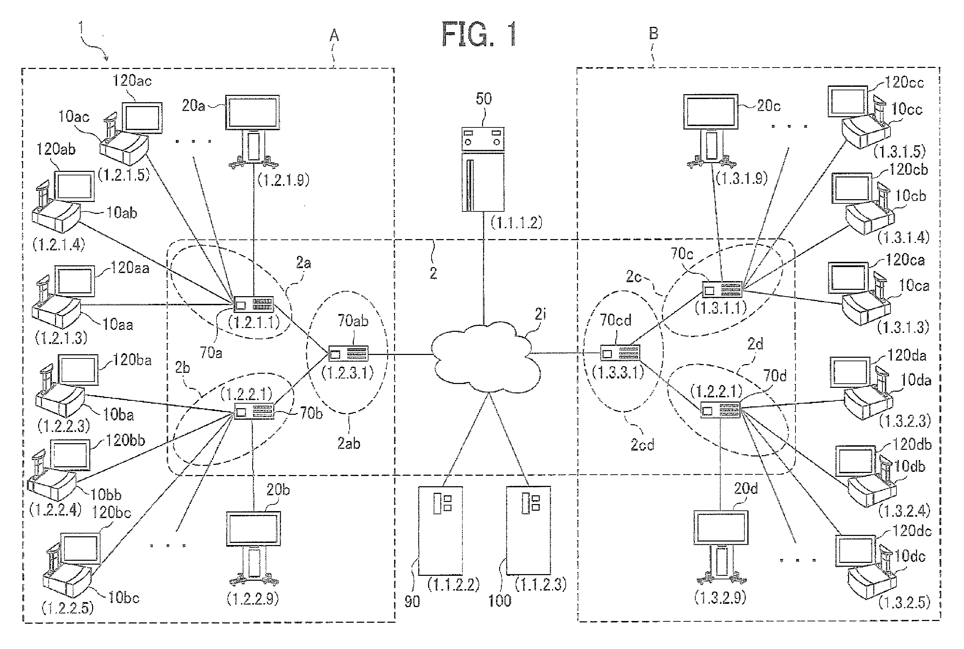

In this example, the transmission system 1 of FIG. 1 is implemented by a communication system that communicates information or information that reflects feelings among the plurality of communication terminals through a communication control system (transmission control system), such as a videoconference system.

### <Configuration of transmission system>

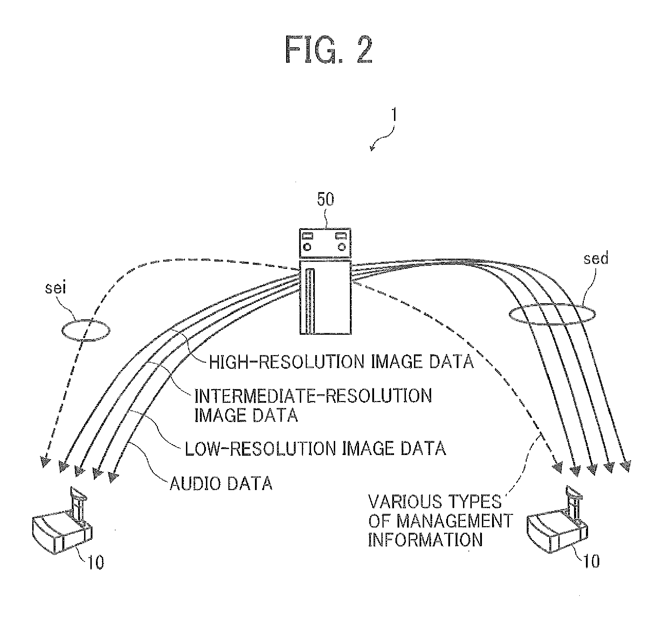

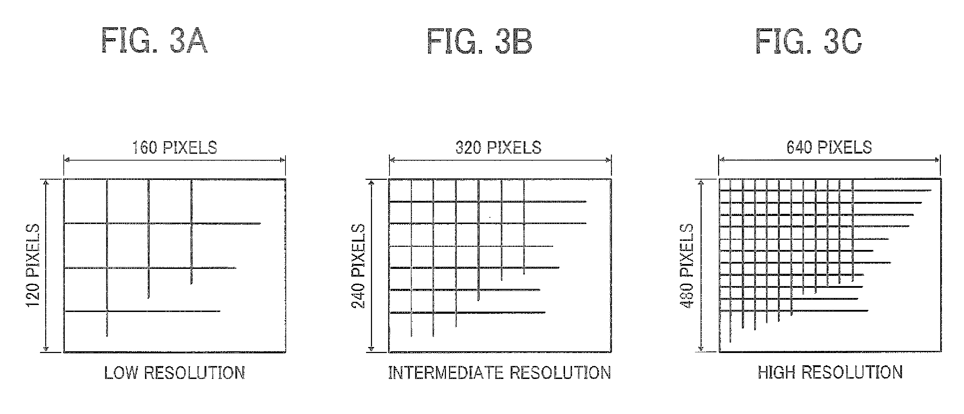

Referring now to FIGs. 1 to 3, a configuration of the transmission system 1 is explained according to an embodiment of the present invention. FIG. 1 illustrates the transmission system 1. FIG. 2 is an illustration for explaining transmission or reception of various data such as image data, sound data, and various management information, in the transmission system 1. FIG. 3 is an illustration for explaining image quality of the image data to be transmitted or received in the transmission system 1.

The transmission system 1 of FIG. 1 includes a plurality of communication terminals 10aa, 10ab, ..., a plurality of displays 120aa, 120ab, ... that are each provided for the communication terminal 10, a plurality of electronic whiteboards 20a, 20b, 20c, and 20d, a transmission control system 50, a program providing system 90, and a maintenance system 100.

The plurality of communication terminals 10 each transmit or receive contents data such as image data and sound data. The other examples of contents data include text data. Alternatively, contents data may be at least one of image data, sound data, and text data.

For the descriptive purposes, any arbitrary communication terminal of the plurality of communication terminals 10aa, 10ab, ... is referred to as the communication terminal 10. Any arbitrary display of the plurality of displays 120aa, 120ab, ... is referred to as the display 120. Any arbitrary electronic whiteboard of the plurality of electronic whiteboards 20a, 20b, 20c, and 20d is referred to as the electronic whiteboard 20. In the following, the communication terminal 10 and the electronic whiteboard 20 are collectively referred to as the transmission terminal.

In this embodiment, the communication terminal 10 that requests to start communication for such as videoconference is referred to as "starting terminal". The communication terminal 10, which is requested by the starting terminal to have communication with, is referred to as the "counterpart terminal".

The communication terminal 10 is able to transmit or receive contents data, which is at least one of image data, sound data, and text data. The electronic whiteboard 20 is able to transmit or receive contents data, which is at least one of image data and coordinate data. In this embodiment, the text data includes data indicating a message to be sent or received for chat.

Referring to FIG. 2, communication between the starting terminal and the counterpart terminal is explained, when the starting terminal and the counterpart terminal are each implemented by the communication terminal 10.

In the transmission system 1, a management information session "sei" is established between the starting terminal and the counterpart terminal via the transmission control system 50 functioning as a relay system, to transmit or receive various management information. Further, four sessions are established between the starting terminal and the counterpart terminal via the transmission control system 50 to transmit or receive four types of data including high-resolution image data, intermediate-resolution image data, low-resolution image data, and sound data in compliance with H.264/SVC coding standard. These four sessions that respectively transmit four types of data are collectively referred to as the contents data session "sed". Although not illustrated in figure, the terminal may transmit or receive, through the contents data session "sed", text data or coordinate data, for example, when such data can be processed both by the request sender terminal and the counterpart terminal. Further, the starting terminal and the counterpart terminal may directly communicate with each other through the contents data session "sed", without the transmission control system 50, for example, when the request sender terminal and the counterpart terminal know information that may be needed to carry out communication such as address information, data type information, etc. The example of FIG. 2 illustrates the case where the starting terminal and the counterpart terminal are each implemented by the communication terminal 10. Alternatively, the starting terminal or the counterpart terminal may be the transmission terminal including the communication terminal 10 and the electronic whiteboard 20 or the electronic whiteboard 20. More specifically, examples of a pair of the starting terminal and the counterpart terminal additionally include a pair of the communication terminal 10 and the electronic whiteboard 20, a pair of the electronic whiteboard 20 and the communication terminal 10, and a pair of the electronic whiteboard 20 and the electronic whiteboard 20. In either case, the starting terminal and the counterpart terminal communicate image data in compliance with H.264/SVC coding standard. Alternatively, any other coding standard may be used such as H.264/AVC, H.265, or VP9.

Referring to FIGs. 3A to 3C, resolution of image data is explained. There are the following images: a low-resolution image, serving as a base image, having horizontal 160 pixels by vertical 120 pixels, as illustrated in FIG. 3A; an intermediate-resolution image having horizontal 320 pixels by vertical 240 pixels, as illustrated in FIG. 3B; and a high-resolution image having horizontal 640 pixels by vertical 480 pixels, as illustrated in FIG. 3C. In the case of communicating via a narrow band, low-quality image data that only includes low-resolution image data serving as a base image is relayed. In the case of communicating via a relatively wide band, intermediate-quality image data including low-resolution image data serving as a base image and intermediate-resolution image data is relayed. In the case of communicating via a very wide band, high-quality image data including low-resolution image data serving as a base image, intermediate-resolution image data, and high-resolution image data is relayed.

The electronic whiteboard 20 of FIG. 1 is widely used in offices or schools. The electronic whiteboard 20 electrically converts contents (drawings), which is drawn by a user with an electronic pen 4 or a hand H (finger) on the display 3, to generate stroke data.

The transmission control system 50 of FIG. 1 relays contents data between or among the plurality of communication terminals 10. For example, the transmission control system 50 centrally manages login authentication by the communication terminal 10, communication states of the communication terminals 10, and candidate list information. In this example, the image data may be a video (moving) image or a still image, or both of video and still images.

The transmission system 1 is provided with a plurality of routers 70a, 70b, 70c, 70d, 70ab, and 70cd, each of which selects a most optimal communication path of image data and sound data. Any arbitrary router of the plurality ofrouters 70a, 70b, 70c, 70d, 70ab, and 70cd is referred to as the router 70.

The program providing system 90 includes a hard disk (HD) 204, which stores a communication terminal control program that causes the communication terminal 10 to perform various functions as the communication terminal 10, and may send the communication terminal control program to the communication terminal 10. The HD 204 of the program providing system 90 further stores an electronic whiteboard control program that causes the electronic whiteboard 20 to perform various functions as the electronic whiteboard 20, and may send the electronic whiteboard control program to the electronic whiteboard 20. The HD 204 of the program providing system 90 further stores a transmission control program that causes the transmission control system 50 to perform various functions as the transmission control system 50, and may send the transmission control program to the transmission control system 50.

The maintenance system 100, which may be implemented by one or more computers, maintains, manages, or conserves at least one of the communication terminal 10, transmission control system 50, program providing system 90 in the transmission system 1. For example, in the case where the maintenance system 100 is located in one country, and the communication terminals 10, the terminal control system 50, and/or the program providing system 90 is/are located outside that country, the maintenance system 100 remotely performs, via a communication network 2, maintenance, management, or conservation of at least one of the communication terminals 10, the terminal control system 50, and the program providing system 90. The maintenance system 100 may perform maintenance such as management of the model number, serial number, sales contact, maintenance checkup, or a past history of failures of at least one of the communication terminals 10, the terminal control system 50, and the program providing system 90. The maintenance system 100 may maintain, manage, or conserve the electronic whiteboard 20.

In this example, the communication terminals 10aa, 10ab, 10ac, ..., the electronic whiteboard 20a, and the router 70a are connected to be communicable with each other by a local area network (LAN) 2a. The communication terminals 10ba, 10bb, 10bc, ..., the electronic whiteboard 20b, and the router 70b are connected to be communicable with each other by a LAN 2b. In addition, the LAN 2a and the LAN 2b are connected to be communicable with each other by a dedicated line 2ab including the router 70ab and are provided in a certain area A. For example, assuming that the area A is an office in Tokyo, the LAN 2a is managed in the first sales division, and the LAN 2b is managed in the second sales division.

Further, in this example, communication terminals 10ca, 10cb, 10cc, ..., the electronic whiteboard 20c, and the router 70c are connected to be communicable with each other by a LAN 2c. The communication terminals 10da, 10db, 10dc,..., the electronic whiteboard 20d, and the router 70d are connected to be communicable with each other by a LAN 2d. In addition, the LAN 2c and the LAN 2d are connected to be communicable with each other by a dedicated line 2cd including the router 70cd and are provided in a certain area B. For example, assuming that the area B is an office in Osaka, the LAN 2c is managed in the first development division, and the LAN 2d is managed in the second development division. The area A and the area B are connected to be communicable with each other from the routers (70ab and 70cd), respectively, via the Internet 2i.

The terminal control system 50, the program providing system 90, and the maintenance system 100 are connected to be communicable with the communication terminals 10 and the electronic whiteboards 20 via the Internet 2i. The terminal control system 50, the program providing system 90, and the maintenance system 100 may be located in the area A or the area B, or may be located in other areas.

The communication network 2 of this embodiment includes the LAN 2a, the LAN 2b, the dedicated line 2ab, the Internet 2i, the dedicated line 2cd, the LAN 2c, and the LAN 2d. The communication network 2 may include not only a wired network, but also a network where communication is performed wirelessly, such as Wireless Fidelity (WiFi) or Bluetooth (registered trademark).

In FIG. 1, four digits indicated below each of the communication terminals 10, each of the electronic whiteboards 20, the terminal control system 50, each of the routers 70, the program providing system 90, and the maintenance system 100 indicates an IP address in an abbreviated form in the general Internet Protocol version 4 (IPv4). For example, the IP address of the communication terminal 10aa is "1.2.1.3". Although IPv6 may be used instead of IPv4, IPv4 is used in order to make the description simple.

Note that the communication terminal 10 and the electronic whiteboard 20 may be used not only for communication between offices or between different rooms in the same office, but also for communication within the same room or for outdoor-indoor communication or outdoor-outdoor communication. In the case where the communication terminals 10 are used outside, wireless communication using a cellular phone communication network or the like is performed.

### <Hardware structure of transmission system>

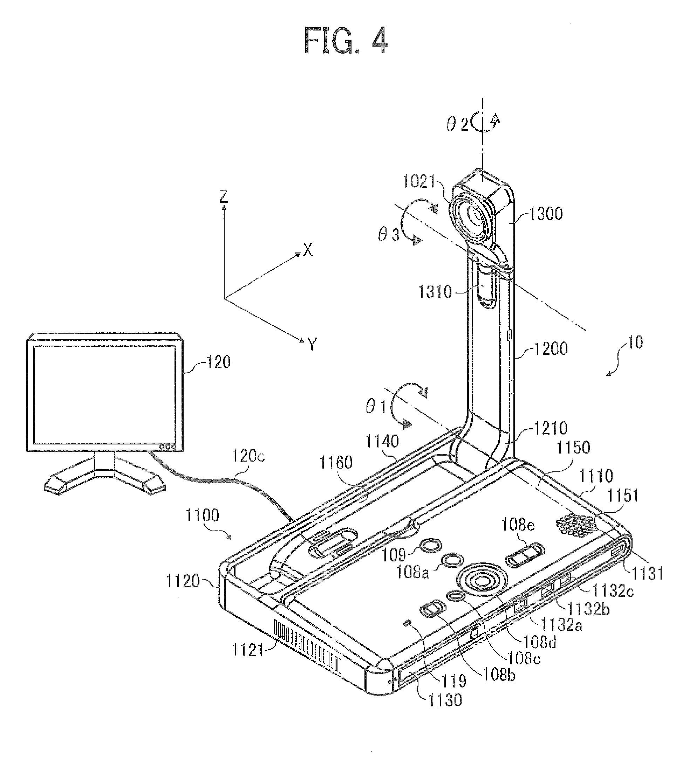

Next, referring to FIGs. 4 to 8, the hardware structure of the transmission system 1 of this embodiment will be described. FIG. 4 is a view illustrating the outer appearance of the communication terminal 10. The description will be given assuming that the longitudinal direction of the communication terminal 10 is the X-axis direction, a direction orthogonal to the X-axis direction on one plane is the Y-axis direction, and a direction orthogonal to the X-axis direction and the Y-axis direction (vertical direction) is the Z-axis direction.

As illustrated in FIG. 4, the communication terminal 10 includes a casing 1100, an arm 1200, and a camera housing 1300. Among these portions, a front wall 1110 of the casing 1100 has an inlet face including a plurality of inlet holes, and a back wall 1120 of the casing 1100 has an exhaust face 1121 on which a plurality of exhaust holes are formed. Accordingly, by driving of a cooling fan included in the casing 1100, air behind the communication terminal 10 can be taken in via the inlet face and exhausted to the rear of the communication terminal 10 via the exhaust face 1121. A right-side wall 1130 of the casing 1100 has a sound pickup hole 1131 formed thereon, and a built-in microphone 114, described later, is capable of picking up sound and noise.

An operation panel 1150 is formed toward the right-side wall 1130 of the casing 1100. The operation panel 1150 has a plurality of operation keys (108a to 108e), a power switch 109, and an alarm lamp 119, which are formed thereon. In addition, the operation panel 1150 has a sound output face 1151, which is formed of a plurality of sound output holes for allowing output sound from a built-in a speaker 115 to pass through. In addition, an accommodation portion 1160 serving as a recess for accommodating the arm 1200 and the camera housing 1300 is formed toward a left-side wall 1140 of the casing 1100. A plurality of connection ports (1132a to 1132c) for electrically connecting cables to an external device connection interface (I/F) 118 are provided on the right-side wall 1130 of the casing 1100. A connection port for electrically connecting a cable 120c for a display 120 to the external device connection I/F 118 is provided toward the left-side wall 1140 of the casing 1100.

The following description uses the term "operation key(s) 108" for indicating an arbitrary one or ones of the operation keys (108a to 108e), and the term "connection port(s) 1132" for indicating an arbitrary one or ones of the connection ports (1132a to 1132c).

The arm 1200 is attached to the casing 1100 via a torque hinge 1210 and is rotatable in the vertical direction within the range of a tilt angle θ1 of 135 degrees with respect to the casing 1100. FIG. 4 indicates a state in which the tilt angle θ1 is 90 degrees.

The camera housing 1300 has a built-in camera 112 provided thereon, and the camera 112 can capture an image of a user, a document, a room, or the like. In addition, the camera housing 1300 has a torque hinge 1310 formed thereon. The camera housing 1300 is attached to the arm 1200 via the torque hinge 1310 and is rotatable in the vertical and horizontal directions within a range of a pan angle θ2 of ± 180 degrees and a tilt angle θ3 of ±45 degrees with respect to the arm 1200, in which the state illustrated in FIG. 4 serves as 0 degrees.

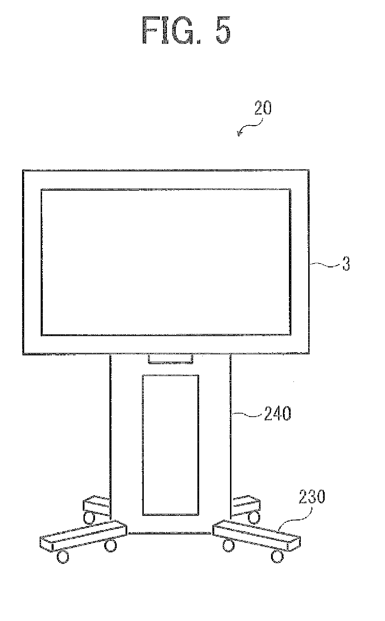

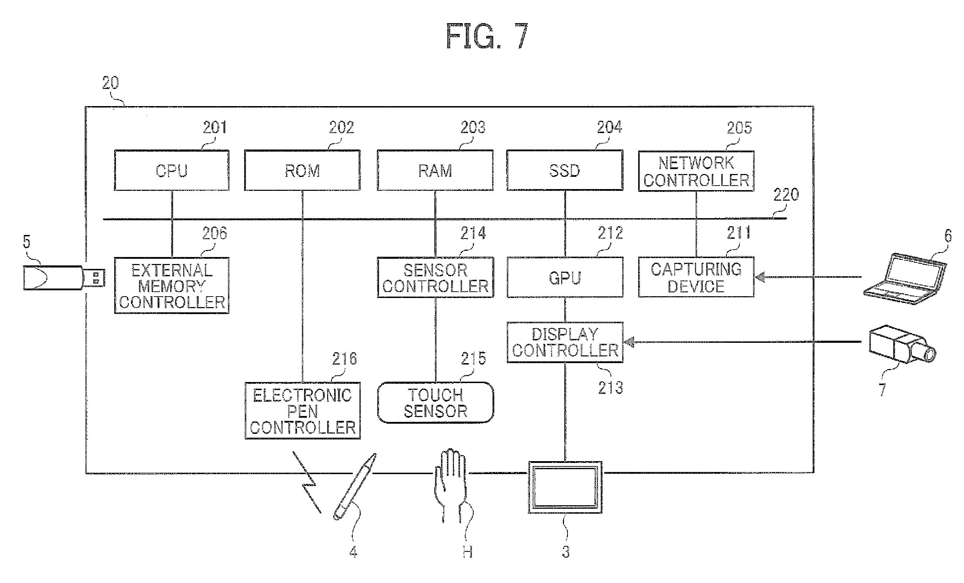

FIG. 5 illustrates an outer appearance of the electronic whiteboard 20. The electronic whiteboard 20 of FIG. 5 includes four legs 230 each having a plurality of wheels at the bottom surface, a support 240 that is connected with the legs 230 so as to extend from the legs 230, and the display 3 as a whiteboard body that is supported by the support 240. The display 3 includes a CPU 201 therein as illustrated in FIG. 7.

Please note that the outer appearance of the communication terminal 10 and the electronic whiteboard 20 is not limited to the above-described example.

Since the terminal control system 50, the program providing system 90, and the maintenance system 100 each have the same appearance as that of a general server computer, descriptions of the outer appearances thereof are omitted.

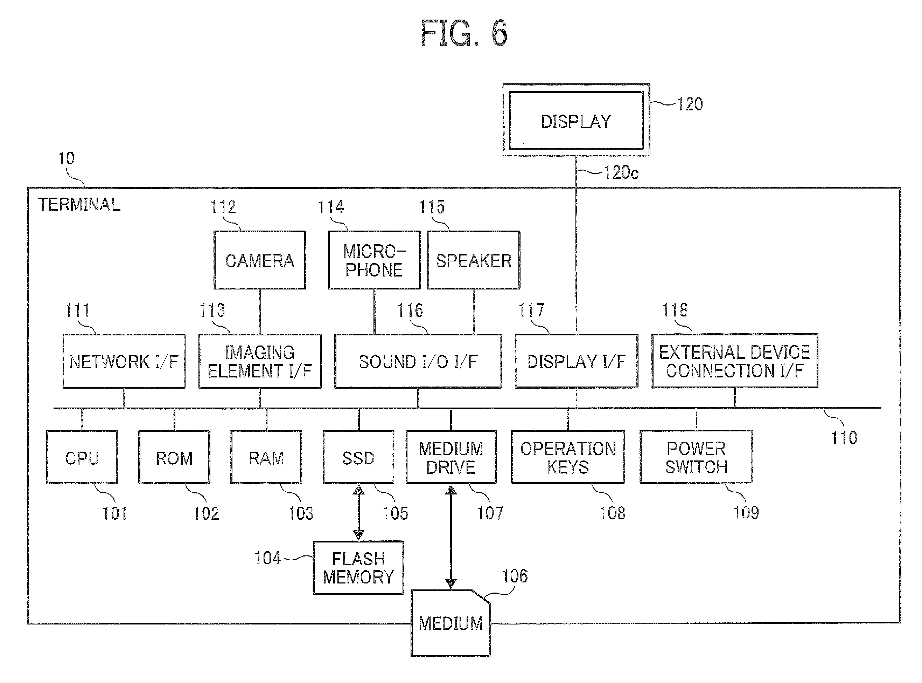

FIG. 6 is a schematic diagram illustrating a hardware structure of the communication terminal 10. As illustrated in FIG. 6, the communication terminal 10 includes a central processing unit (CPU) 101 that controls entire operation of the communication terminal 10, a read-only memory (ROM) 102 that stores a program used for controlling the CPU 101, such as an initial program loader (IPL), a random-access memory (RAM) 103 used as a work area for the CPU 101, a flash memory 104 that stores various types of data, such as the communication terminal program, image data, and sound data, a solid state drive (SSD) 105 that controls reading/ writing of various types of data from/to the flash memory 104 under control of the CPU 101, a medium drive 107 that controls reading/writing (storage) of data from/to a recording medium 106 such as a flash memory, the operation keys 108 operated in the case of, for example, selecting a counterpart terminal for the communication terminal 10, the power switch 109 for turning ON/OFF the power of the communication terminal 10, and a network interface (I/F) 111 for transmitting data using the communication network 2.

The communication terminal 10 further includes: the built-in camera 112, which captures an image of an object and obtains image data under control of the CPU 101; an imaging element I/F 113 that controls driving of the camera 112; the built-in microphone 114, which receives a sound input; the built-in speaker 115, which outputs sound; a sound input/output I/F 116 that processes inputting/outputting of a sound signal between the microphone 114 and the speaker 115 under control of the CPU 101; a display I/F 117 that transmits image data to an external display 120 under control of the CPU 101; the external device connection I/F 118 connected to a connection port 1021g illustrated in FIG. 4 in order to connect various external devices; the alarm lamp 119, which indicates an abnormality of various functions of the communication terminal 10; and a bus line 110 such as an address bus and a data bus for electrically connecting the above-described elements as illustrated in FIG. 4.

The display 120 may be implemented by a liquid crystal display or organic electroluminescence (EL) display, which displays an image of the object, an operation icon, or the like. In addition, the display 120 is connected to the display I/F 117 by the cable 120c. The cable 120c may be an analog red green blue (RGB) (video graphic array (VGA)) signal cable, a component video cable, a high-definition multimedia interface (HDMI) signal cable, or a digital video interactive (DVI) signal cable.

The camera 112 includes a lens system, and a solid-state imaging element that photoelectrically converts an image of the object to electronic data. As the solid-state imaging element, for example, a complementary metal-oxide-semiconductor (CMOS) or a change-coupled device (CCD) is used.

The external device connection I/F 118 is capable of connecting an external device such as an external camera, an external microphone, or an external speaker by using a Universal Serial Bus (USB) cable or the like. In the case where an external camera is connected, the external camera is driven in preference to the built-in camera 112 under control of the CPU 101. Similarly, in the case where an external microphone is connected or an external speaker is connected, the external microphone or the external speaker is driven in preference to the built-in microphone 114 or the built-in speaker 115 under control of the CPU 101.

Note that the camera 112, the microphone 114, and the speaker 115 need not necessarily be included in the communication terminal 10, and the communication terminal 10 may be connected to only an external camera, an external microphone, and an external speaker. The display 120 may be incorporated in the communication terminal 10. In alternative to the display 120, any desired device capable of displaying may be used such as a projector. In addiction, the recording medium 106 is removable from the communication terminal 10. In addition, a non-volatile memory that reads or writes data under control of the CPU 101 is not limited to the flash memory 104, and an electrically erasable and programmable read-only memory (EEPROM) may be used instead.

Referring now to FIG. 7, a hardware structure of the electronic whiteboard 20 is explained according to an example embodiment of the present invention.

As illustrated in FIG. 7, the electronic whiteboard 20 includes a CPU 201 that controls entire operation of the electronic whiteboard 20, a ROM 202 that stores a program used for controlling the CPU 201 such as an IPL, a RAM 203 used as a work area for the CPU 201, a SSD 204 that stores various data such as an electronic whiteboard control program, a network controller 205 that controls communication through the communication network 2, and an external memory controller 206 that controls communication with an external device such as a USB memory 5.

The electronic whiteboard 20 further includes a capturing device 211 that displays image data as a video image or a still image through a display of a notebook PC 6, a graphics processing unit (GPU) 212 that process graphics data, and a display controller 205 that controls display of a screen image output by the GPU 212 through the display 3.

The electronic whiteboard 20 further includes a touch sensor 215 that detects touch to the screen by an object such as the electronic pen 4 or the user's hand H, and a sensor controller 214 that controls processing by the touch sensor 215. In this example, the touch sensor 215 detects touch when the infrared light is interrupted by the object. More specifically, the display 3 is provided with two light emitting and receiving devices at both ends of the display 3 on the top side edge. The display 3 is further provided with reflectors on the side edges of the display 3. The light emitting and receiving device emits infrared light in parallel to the display screen surface. The infrared light is reflected at the reflector back to the light emitting and receiving device along the same optical path that the emitted light passes, and received at the light emitting and receiving device. If the display screen is touched, the infrared light will be blocked such that the infrared light is not received at the light emitting and receiving device. The touch sensor 215 outputs identification (ID) of the infrared light emitted from the light emitting and receiving device, which is blocked, to the sensor controller 214. The sensor controller 214 detects the coordinate where the screen is touched by the object.

In alternative to the above-described infrared technology, the touch sensor 215 may apply any other desired touch screen technology. Examples of such technologies include, but not limited to, capacitive technology in which the touched coordinate is detected based on a change in capacitance, resistive technology in which the touched coordinate is detected based on a change in voltage between two opposing resistive films, and electromagnetic resonance technology in which the touched coordinate is detected by electromagnetic resonance generated as the screen is touched.

The electronic whiteboard 20 further includes an electronic pen controller 216. The electronic pen controller 216 communicates with the electronic pen 4 to determine whether the display 3 is touched with the electronic pen 4. The electronic pen controller 216 may detect touch by any portion of the electronic pen 4, such as a tip of the pen 4, a cap of the pen 4, or a portion where the user holds.

The electronic whiteboard 20 further includes a bus line 220, which may be implemented by an address bus or a data bus, to electrically connect the CPU 201, ROM 202, RAM 203, SSD 204, network controller 205, external memory controller 206, capturing device 211, GPU 212, sensor controller 214, and electronic pen controller 216.

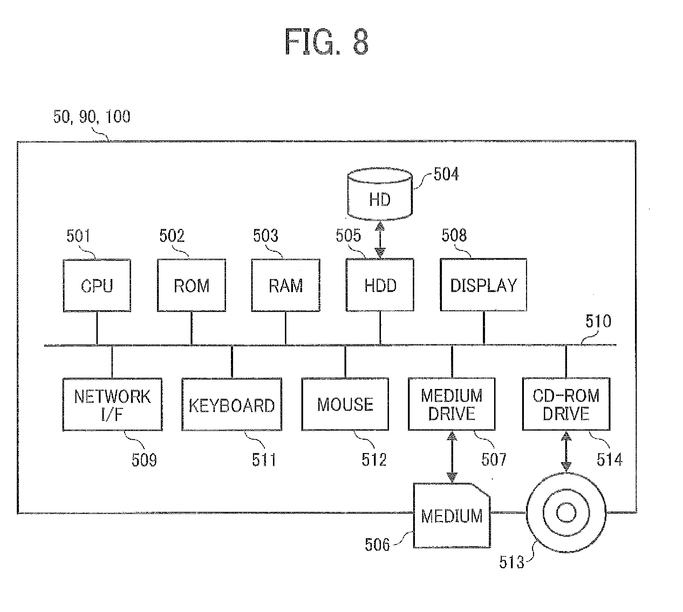

FIG. 8 is a schematic diagram illustrating a hardware structure of any one of the transmission control system 50, the program providing system 90, and the maintenance system 100. For simplicity, the case for the transmission control system 50 is described below.

The transmission control system 50 includes a CPU 501 that controls entire operation of the transmission control system 50, a ROM 502 that stores a program used for controlling the CPU 501 such as an IPL, a RAM 503 used as a work area for the CPU 501, the HD 504 that stores various types of data such as the transmission control program, a hard disk drive (HDD) 505 that controls reading/ writing of various types of data from/to the HD 504 under control of the CPU 501, a medium drive 507 that controls reading/writing (storage) of data from/to a recording medium 506 such as a flash memory, a display 508 that displays various types of information such as a cursor, a menu, a window, characters, or an image, a network I/F 509 for transmitting data using the communication network 2, a keyboard 511 including a plurality of keys for entering characters, numerals, and various instructions, a mouse 512 that selects and executes various instructions, selects a processing target, and moves the cursor, a compact disc read-only memory (CD-ROM) drive 514 that controls reading/writing of various types of data from/to a CD-ROM 513 serving as an example of a removable recording medium, and a bus line 510 such as an address bus and a data bus for electrically connecting the above-described elements.

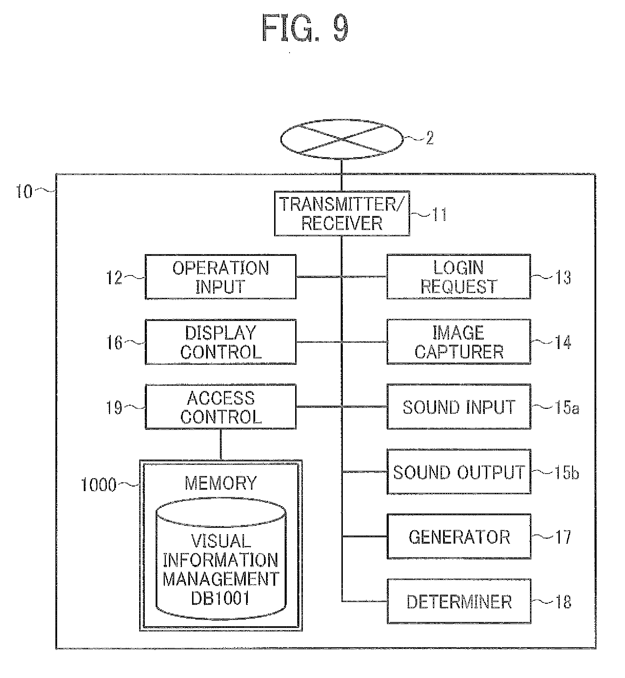

Referring now to FIGs. 9 to 21, a functional structure of the communication terminal 10, the electronic whiteboard 20, and the transmission control system 50 is explained according to an example embodiment of the present invention.

### <Functional structure of communication terminal>

Referring to FIG. 9, a functional structure of the communication terminal 10 is explained according to an example embodiment of the present invention.

The communication terminal 10 includes a transmitter/receiver 11, an operation input 12, a login request 13, an image capturer 14, a sound input 15a, a sound output 15b, a display control 16, a generator 17, a determiner 18, and an access control 19, each of which is implemented by a hardware structure of FIG. 6 that operates in cooperation with a communication control program.

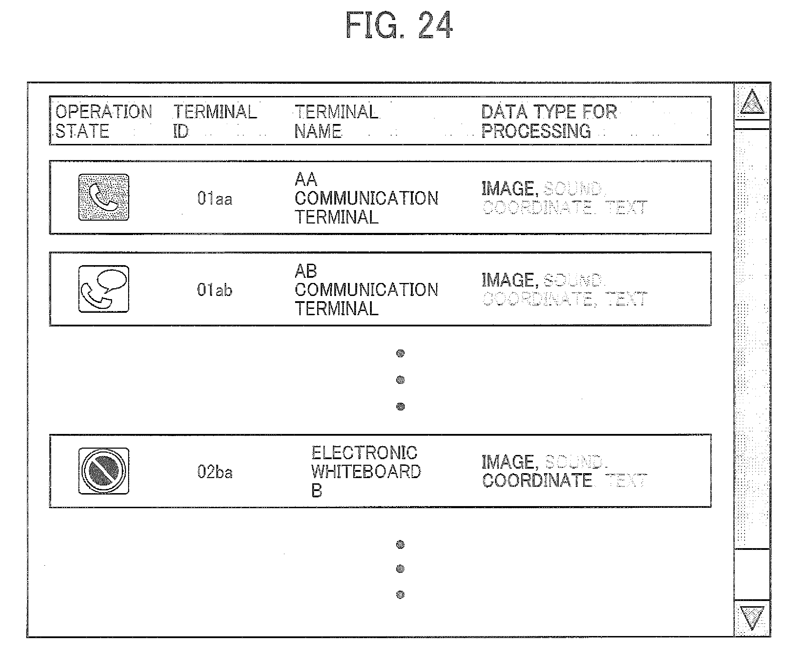

The communication terminal 10 further includes a memory 1000, which is implemented by the flash memory 104 of FIG. 6. The memory 1000 stores therein candidate list frame data, which corresponds to a frame portion of a candidate list screen of FIG. 24, which is a portion other than a selection area of the candidate list screen. The memory 1000 further stores a terminal ID for identifying the own terminal 10 and a password associated with the terminal ID. The memory 1000 further stores data type information indicating a type of data that can be processed by the terminal 10. The memory 1000 further stores therein image data and/or sound data that is received as the terminal 10 communicates with a counterpart terminal 10 such that the image data and/or sound data is overwritten. Before the image data is overwritten, an image generated based on the image data is displayed onto the display 120. Before the sound data is overwritten, sounds generated based on the sound data is output through the speaker 115. The memory 1000 stores therein a visual information management database (DB) 1001.

### (Visual information management table)

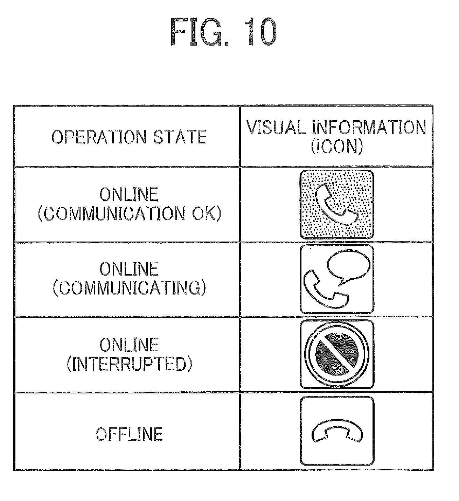

FIG. 10 illustrates an example data structure of a visual information management table, which is one example of the visual information management DB 1001. The visual information management table stores, for each one of operation state information indicating an operation state of the counterpart terminal, visual information to be displayed on the display 120 in the form of candidate (contact) list. The counterpart terminal 10 is a terminal, which is selected by the terminal 10 from among a plurality of candidate counterpart terminals, to start communication with. In this example, the visual information is expressed as an icon representing a specific operation state of the terminal as illustrated in FIG. 10. The terminal 10 may obtain visual information to be stored in the visual information management table of FIG. 10 from the communication control system 50, for example, as a response in response to the login request information transmitted from the terminal 10 (S42). Alternatively, the visual information may be previously stored in the memory 1000, before the terminal 10 is shipped to the user's site. In this example, the visual information mainly includes visual information indicating that the operation state of the counterpart terminal is online and available for communication ("online, communication OK"), visual information indicating that the operation state of the counterpart terminal is online and communicating "online, communicating"), information indicating that the operation state of the counterpart terminal is online but interrupted ("online, interrupted"), and visual information indicating that the operation state of the counterpart terminal is offline ("offline").

The transmitter/receiver 11 of the communication terminal 10, which may be implemented by the network I/F 111 under control of the CPU 101 (FIG. 6), transmits or receives various data or information to or from another communication terminal, device, or system, through the communication network 2.

The operation input 12 may be implemented by such as the operation keys 108 or the power switch 109 (FIG. 6) under control of the instructions received from the CPU 101. The operation input 12 receives a user instruction input by the user, through the operation keys 108 or the power switch 109, such as a user selection. For example, when the user selects "ON" using the power switch 109 (FIG. 6), the operation input 12 (FIG. 9) receives a user instruction for turning the power on, and causes the terminal 10 to turn on the power. The operation input 12 further receives input of text data, from the user at the terminal 10.

The login request 13, which may be implemented by the instructions received from the CPU 101, causes the transmitter/receiver 11 to transmit a login request that requests for login authentication and a communication start request, to the transmission control system 50 through the communication network 2, in response to turning on of the power of the communication terminal 10.

The image capturer 14, which is implemented by the imaging element I/F 113 and the camera 112 according to the instructions received from the CPU 101, captures an image of an object and outputs the captured image data.

The sound input 15a may be implemented by the sound I/O I/F 116 according to the instructions received from the CPU 101, in cooperation with the microphone 114. After the microphone 114 converts sounds of the user at the communication terminal 10 to a sound signal, the sound input 15a inputs the sound signal in the form of sound data for further processing. The sound output 15b may be performed by the sound I/O I/F 116 according to the instructions received from the CPU 101, in cooperation with the speaker 115. The sound output 15b outputs a sound signal of sound data that is received from the counterpart terminal 10 through the speaker 115.

The display control 16, which may be implemented by the display I/F 117 according to the instructions received from the CPU 101, controls transmission of image data to the display 120 for display onto the display 120.

The generator 17, which may be implemented by the instructions received from the CPU 101, generates and/or updates a candidate list screen based on the candidate list frame data and the candidate list information, which is read from the memory 1000, such as a candidate list screen of FIG. 24.

The determiner 18, which may be implemented by the instructions received from the CPU 101, periodically determines whether the communication terminal 10 normally operates. In another example, the determiner 18 determines a type of data that can be commonly processed by the communication terminal 10 and the counterpart terminal 10, based on the data type information of the communication terminal 10 and data type information of the counterpart terminal 10 that is received at the transmitter/receiver 11.

The access control 19, which may be implemented by the SSD 105 according to the instructions received from the CPU 101, stores various data in the memory 1000 or reads out various data from the memory 1000.

In this example, any one of the terminal ID of the terminal 10 and the device ID of the electronic whiteboard 20 includes any type of identification information that can be expressed by any language, character, symbol, mark, or any combination of language, character, symbol, and mark.

### <Functional structure of electronic whiteboard>

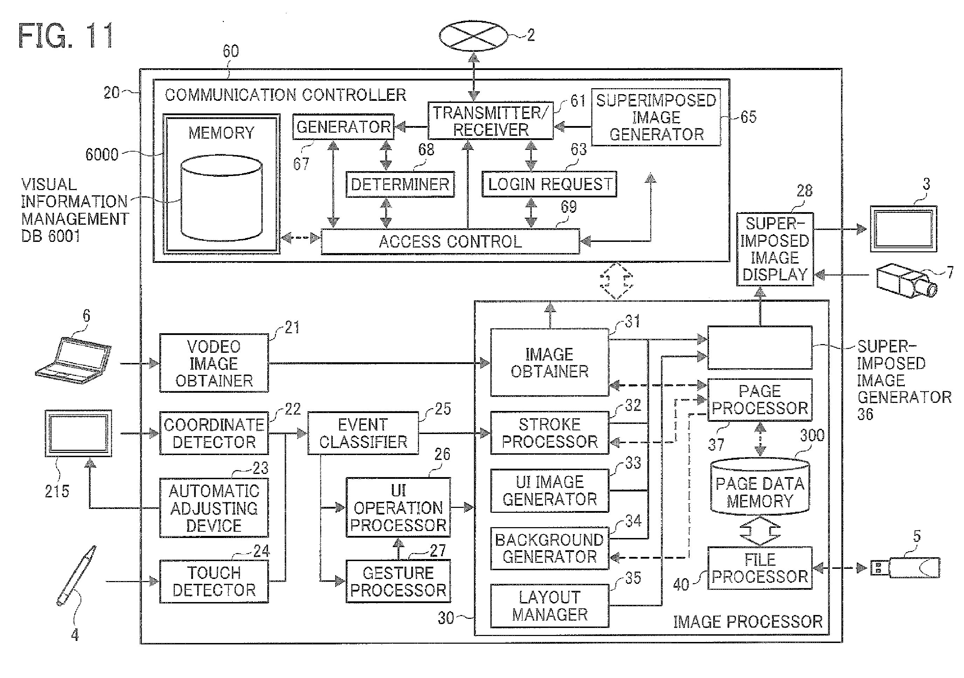

Referring to FIGs. 11 to 16, a functional structure of the electronic whiteboard 20 is explained according to an example embodiment of the present invention. FIG. 11 is a schematic block diagram illustrating a functional structure of the electronic whiteboard 20.

The electronic whiteboard 20 includes a video image obtainer 21, a coordinate detector 22, an automatic adjusting device 23, a touch detector 24, an event classifier 25, a UI operation processor 26, a gesture processor 27, an superimposed image display 28, an image processor 30, and a communication controller 60, which may be implemented by the hardware structure of FIG. 7 in cooperation with an electronic whiteboard control program.

The video image obtainer 21 obtains an output image, which is output from an image output device such as the notebook PC 6 connected with the electronic whiteboard 20 through a communication line such as the cable. When an image signal from the image output device is received, the video image obtainer 21 analyzes the received image signal to obtain a resolution of an image frame of the output image and a frequency in updating the image frame of the output image. Based on the obtained information, the video image obtainer 21 outputs an image for display to an image obtainer 31 of the image processor 30.

The touch detector 24 detects an event generated by a user with respect to the display 3, for example, touch operation of the user with respect to the display surface with such as a tip of the electronic pen 4 or the user's hand H.

The automatic adjusting device 23, which is executed with turning on of the electronic whiteboard 20, adjusts various image processing parameters for an optical sensor camera of the touch sensor 215, so that the touch sensor 215 can correctly output a sensor value indicating the detected event to the coordinate detector 22.

The coordinate detector 22 detects a coordinate indicating the location where the event is detected by the touch detector 24. The coordinate detector 22 may further detect an area, rather than a specific location, subjected for touch by the user's hand H or the pen 4.

The event classifier 25 classifies the event, which is detected by the touch detector 24 at the coordinate detected by the coordinate detector 22, by operation type, specifically, into stroke operation, user interface (UI) operation, and gesture operation.

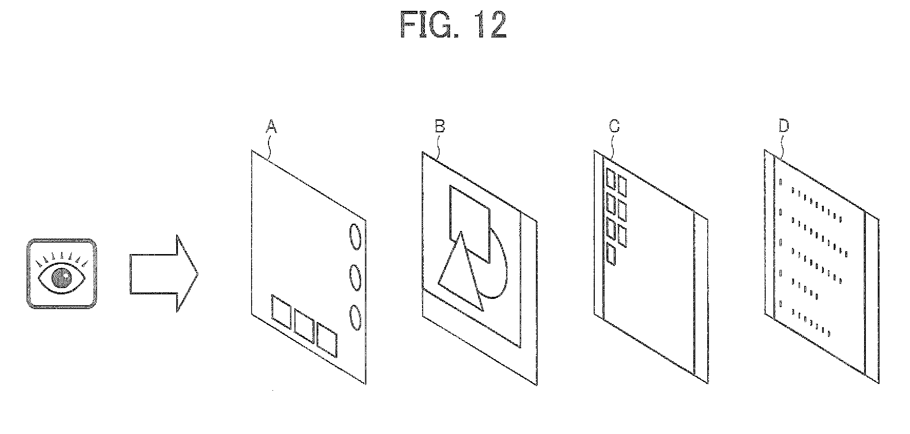

Referring now to FIG. 12, stroke operation, UI operation, and gesture operation are explained. FIG. 12 illustrates a layer structure of the superimposed image generated by the electronic whiteboard 20.

The stroke operation is an event, which is detected when a stroke image B in FIG. 12 is displayed onto the display 3, and corresponds to user operation of drawing with the electronic pen 4 on the display surface that is performed from the time when the electronic pen 4 is pressed against the display surface, to the time when the electronic pen 4 is released from the display surface. With this stroke operation, for example, an alphabet "S" or "T" may be drawn onto the display 3. The stroke operation not only includes drawing of an image such as a character, but also includes deleting the drawn image or editing the drawn image.

The UI operation is an event, which is detected when a UI image A in FIG. 12 is displayed onto the display 3, and corresponds to user operation of pressing a specific location or area on the display surface with the electronic pen 4 or the user's hand H. The UI operation may configure a color or a width of a line to be used for drawing or deleting the drawing image.

The gesture operation is an event, which is detected when the stroke image B in FIG. 12 is displayed on the display 3, and corresponds to user operation of touching with the user's hand H or moving the user's hand H over the display surface. The gesture operation may, for example, enlarge or reduce an image size, change a display area of the image, or switches a display page of the image, as the user moves the user's hand H over the display surface.

Referring back to FIG. 11, the UI operation processor 26 refers to the event that is classified into the UI operation by the event classifier 25, and performs processing according to a UI component where the event is detected. Examples of UI component include, but not limited to, icon, key or button, list, check box, and text box.

The gesture processor 27 refers to the event that is classified into the gesture operation by the event classifier 25, and performs processing according to the detected event.

The superimposed image display 28 displays the image, which is generated by the superimposed image generator 36, onto a display output device such as the display 3. Further, the superimposed image display 28 adds a video image (picture) that is transmitted from one image output device such as the camera 7, into a video image of the other image output device such as the notebook PC 6, which is referred to as a picture-in-picture. The superimposed image display 28 may cause the display 3 to switch, from a display showing the added image as apart of the display surface, to a display showing the added image entirely on the display surface.

### (Functional structure of image processor)

The image processor 30 superimposes image layers, which are illustrated in FIG. 12. The image processor 30 includes the image obtainer 31, a stroke processor 32, a UI image generator 33, a background generator 34, a layout manager 35, the superimposed image generator 36, a page processor 37, a file processor 40, and a page data memory 300.

The image obtainer 31 obtains, from the video image obtained at the video image obtainer 21, each frame as an image to be processed, and outputs the obtained image as an output image C in FIG. 12.

The stroke processor 32 refers to the event, which is classified into the stroke operation by the event classifier 25, and performs processing such as drawing an image, deleting the drawn image, or editing the drawing image. The image generated through the stroke operation corresponds to the stroke image B in FIG. 12.

The UI image generator 33 generates a user interface (UI) image, which is previously set at the electronic whiteboard 20. The UI image generated by the UI image generator 33 corresponds to the UI image A in FIG. 12.

The background generator 34 generates a background image to be displayed on the display 3. The background image, which is generated by the background generator 34, corresponds to a background image D in FIG. 12. In this example, the background image may have any desired pattern, such as a plain or a grid.

The layout manager 35 generates or modifies layout information indicating the layout of each of the images that are output, respectively, from the image obtainer 31, stroke processor 32, UI image generator 33, and background generator 34, for processing by the superimposed image generator 36. With the layout information, the layout manager 35 instructs the superimposed image generator 36 to place each one of the output image C, stroke image B, UI image A, and background image D in a specific order.

The superimposed image generator 36 superimposes the output image C from the image obtained 31, the stroke image B from the stroke processor 32, the UI image A from the UI image generator 33, and the background image D from the background generator 34, according to the layout information of the layout manager 35. Referring to FIG. 12, the images are superimposed in this order from the UI image A, the stroke image B, the output image C, and the background image D, such that the user can see each image.

The superimposed image generator 36 may change between the output image C and the background image D when displaying with the UI image A and the stroke image B. For example, assuming that the cable between the electronic whiteboard 20 and the image output device (notebook PC 6) is disconnected while the output image C is displayed with the UI image A and the stroke image B, the layout manager 35 may display the output image C in alternative to the background image D, with the UI image A and the stroke image B. The superimposed image display 3 may enlarge or reduce a display size, or relocate a display area.

The page processor 37 stores data of the stroke image B and data of the output image C in the page data memory 300 together as one page data file. The page processor 37 further transmits the page data stored in the page data memory 300 to the superimposed image generator 36 via the image obtainer 31. With this page data, the superimposed image display 28 displays the image of the page data onto the display 3.

The page processor 37 further transmits the page data stored in the page data memory 300 to the communication controller 60 via the image obtained 31. The communication controller 60 transmits the page data (stroke arrangement data, and media data) to the other electronic whiteboard 20 or the communication terminal 10. The page processor 37 may further transmit the page data to the stroke processor 32 to enable the stroke processor 32 to re-edit the stroke data. The page processor 37 may delete or copy the page data.

In reading the page data from the page data memory 300, the page processor 37 classifies one page data file, into the stroke arrangement data corresponding to the stroke image B, and the media data corresponding to the background image D. More specifically, the page processor 37 temporarily stores the data of the output image C being displayed on the display 3, in the page data memory 300. When reading the stored output image C from the page data memory 300, the page processor 37 reads the output image C as media data corresponding to the background image D. The page processor 37 further outputs the stroke arrangement data corresponding to the stroke image B, which is a part of the page data read from the page data memory 300, to the stroke processor 32. The page processor 37 outputs the media data corresponding to the background image D, which is the other part of the page data read from the page data memory 300, to the image obtainer 31.

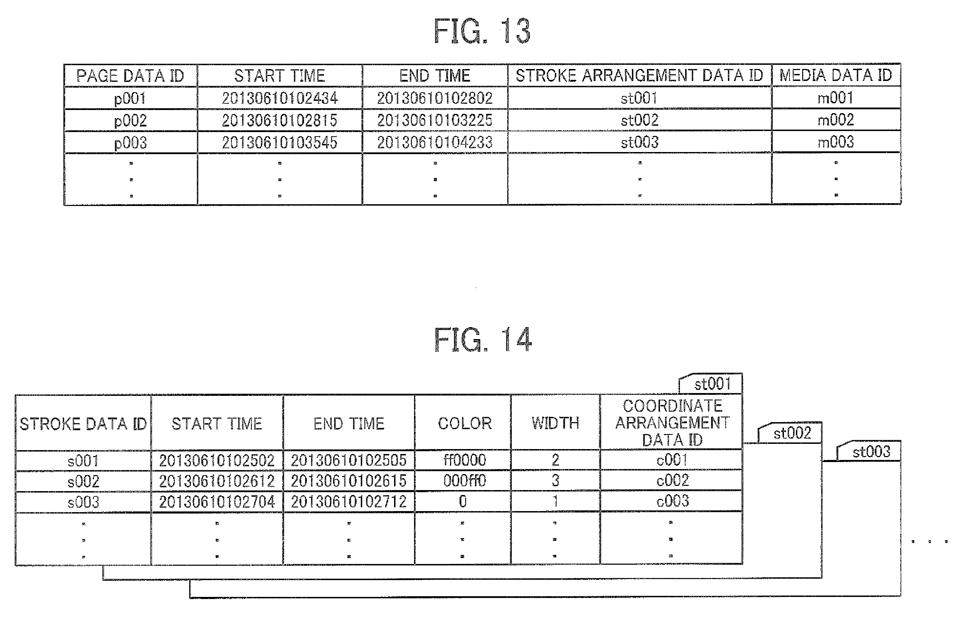

The page data memory 300 stores the page data, such as the page data illustrated in FIG. 13. FIG. 13 illustrates an example data structure of the page data. The page data is, in this example, one-page data (stroke data and image data) to be displayed onto the display 3. Referring now to FIGs. 13 to 16, contents of the page data is explained.

The file processor 40 detects an error, when the electronic whiteboard 20 ends operation in error, and recovers page data that is not stored. For example, when operation successfully ends, the file processor 40 obtains page data from the page data memory 300, and stores the page data as a PDF file in the USB 5. Even when operation ends in error, for example, as the electronic whiteboard 20 is shut down due to power failure, the page data is kept stored in the page data memory 300. When power is restored, the file processor 40 recovers the page data from the page data memory 300. The file processor 40 reads out the PDF file from the USB memory 5, and stores each page of the PDF file as page data in the page data memory 300.

Referring now to FIGs. 13 to 16, a data structure of page data is explained. As illustrated in FIG. 13, the page data includes a page data ID for identifying a specific page, a start time when display of the specific page starts, an end time when modification of the contents of the specific page by stroke or gesture operation ends, an stroke arrangement data ID for identifying the stroke arrangement data that reflects the stroke operation by the electronic pen 4 or the user's hand H, and a media data ID for identifying media data, which are stored in association with one another. The stroke arrangement data is data, which is used for displaying the stroke data B of FIG. 12 on the display 3. The media data is data, which is used for displaying the background image D of FIG. 12 on the display 3.

For example, assuming that the user draws one letter with one stroke using the electronic pen 4, such as the letter "S", one item of stroke data is generated with one stroke data ID. In another example, assuming that the user draws one letter with two strokes using the electronic pen 4, such as the letter "T", two items of stroke data are generated with two stroke data IDs.

The stroke arrangement data includes detailed information as illustrated in FIG. 14. The one item of stroke arrangement data of FIG. 13 includes a plurality of stroke data items of FIG. 14. The stroke data stores a stroke data ID for identifying the stroke data, a start time at which drawing of one stroke is started, an end time at which drawing of one stroke is ended, a color of the stroke, a width of the stroke, a coordinate arrangement data ID for identifying the arrangement of a passage of the stroke, which are stored in association with one another.

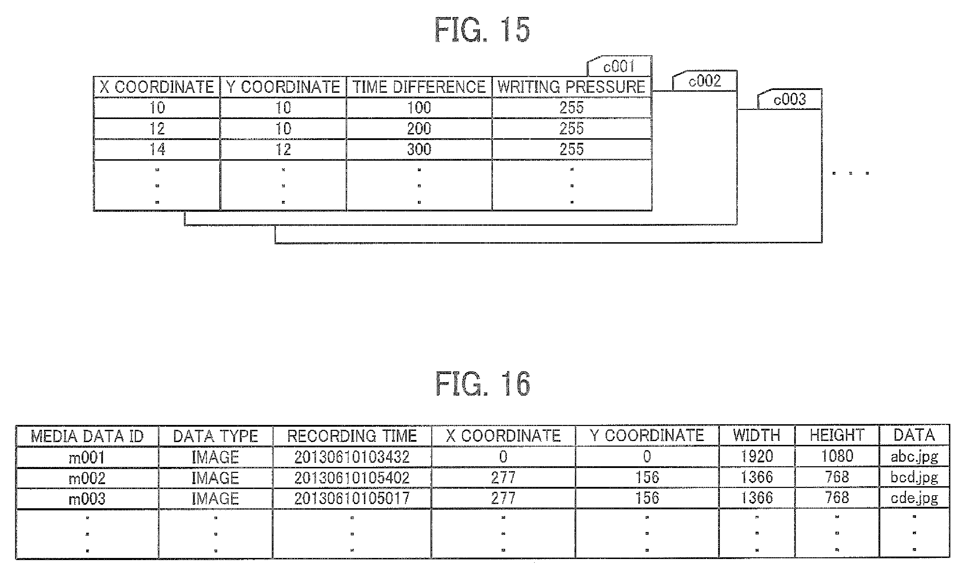

The coordinate arrangement data of FIG. 14 includes detailed information as illustrated in FIG. 15. The coordinate arrangement data of FIG. 15 includes a X coordinate and a Y coordinate that indicate a specific point on the display 3, a time difference in milliseconds (ms) between the time when drawing of a stroke starts and the time when the stroke passes the specific point, and writing pressure of the electronic pen 4 detected at the specific point, which are stored in association with one another. The coordinate arrangement data of FIG. 14 can be indicated using a collection of specific points in FIG. 15. For example, assuming that the user draws the alphabet "S" with the electronic pen 4 in one stroke, that stroke passes a plurality of points such that the coordinate arrangement data indicates these plurality of points.

The media data of FIG. 13 includes detailed information as illustrated in FIG. 16. As illustrated in FIG. 16, the media data stores a media data ID for identifying the media data included in the page data of FIG. 13, a data type of the media data, a recording time when the page processor 37 stores the page data in the page data memory 300, a X coordinate and a Y coordinate that indicate a position of an image of the page data to be displayed on the display 3, a size of the page data image indicated by a width and a height, and data indicating contents of the media data, which are stored in association with one another. In this example, the position of the page data image to be displayed on the display 3 is defined by the upper left corner of the page data image, when the upper left corner of the display 3 is set at X=0 and Y=0.

Referring back to FIG. 11, a functional structure of the communication controller 60 is explained. The communication controller 60 controls processing, performed by the electronic whiteboard 20 to communicate with the external apparatus such as the communication terminal 10, the other electronic whiteboard 20, the transmission control system 50, the program providing system 90, and the maintenance system 100.

The communication controller 60 includes a transmitter/receiver 61, a login request 63, a superimposed image generator 65, a generator 67, a determiner 68, and an access control 69. The communication controller 60 further includes a memory 6000, which is implemented by the SSD 204 of FIG. 7. The memory 6000 stores data type information indicating a type of data that the electronic whiteboard 20 is capable of processing. The memory 6000 further stores a visual information management DB 6001, such as a visual information management table. The visual information management table is similar in data structure to the visual information management table of FIG. 10, which is stored in the communication terminal 10.

In this example, the functional structure of the communication controller 60 is substantially similar to the functional structure of the communication terminal 10 as illustrated in FIG. 9. The transmitter/receiver 61, login request 63, generator 67, determiner 68, and access control 69 correspond to the transmitter/receiver 11, login request 13, generator 17, determiner 18, and access control 19, respectively. The memory 6000 is substantially similar in function to the memory 1000 of the communication terminal 10.

The superimposed image generator 65 superimposes a plurality of layer images as described above referring to FIG. 12. The determiner 68 periodically determines whether the electronic whiteboard 20 normally operates.

### <Functional structure of transmission control system>

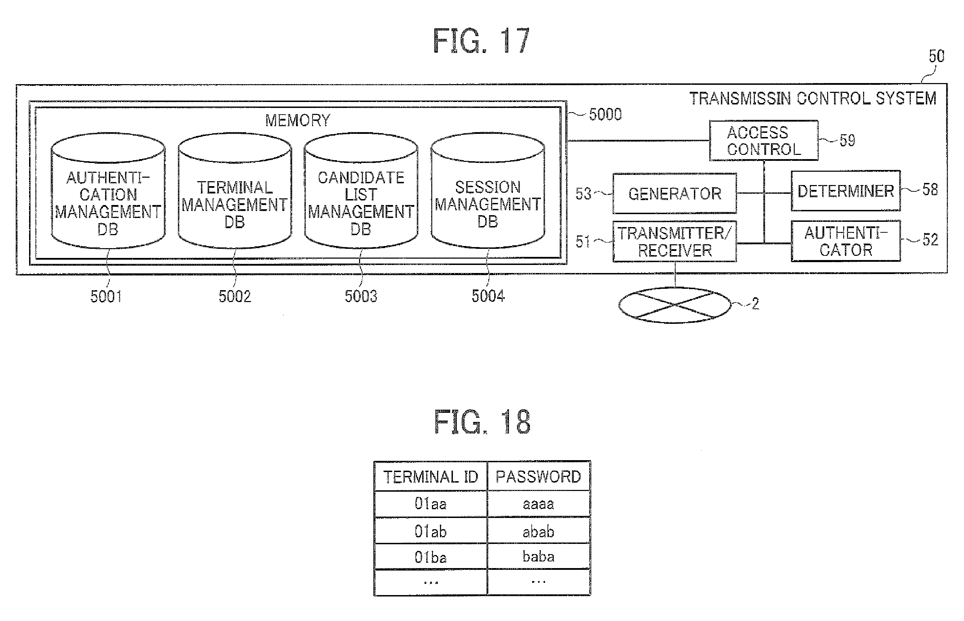

Referring now to FIGs. 17 to 21, a functional structure of the transmission control system 50 is explained according to an example embodiment of the present invention. The transmission control system 50 includes a transmitter/receiver 51, an authenticator 52, a generator 53, a determiner 58, and an access control 59, each of which is implemented by a hardware structure of FIG. 8 that operates in cooperation with a transmission control program.

The transmission control system 50 further includes a memory 5000, which is implemented by the HD 504 of FIG. 8. The memory 5000 stores candidate list frame data to be displayed as a part of the candidate list screen of FIG. 24. The candidate list frame data corresponds to a portion of the candidate list screen of FIG. 24, which is other than contents information including the icons, the terminal IDs such as "01aa", the terminal names such as "AA communication terminal", and data type such as "image, sound, coordinate, text".

In the following, for simplicity, the stroke arrangement data is represented by the "coordinate data", and the media data is represented by the "image data", The type of data that is managed using the terminal management DB 5002 includes an "image" indicating that the image data can be processed, and a "coordinate" indicating that the coordinate data can be processed.

### (Authentication management table)

The memory 5000 stores an authentication management DB 5001, which is implemented by an authentication management table of FIG. 18. The authentication management table of FIG 18 stores, for each one of a plurality of transmission terminals (the communication terminals 10 and the electronic white boards 20) managed by the transmission control system 50, a terminal ID and a password in association with each other. For example, the authentication management table of FIG. 18 indicates that the communication terminal 10aa has the terminal ID "01aa" and the password "aaaa".

### (Terminal management table)

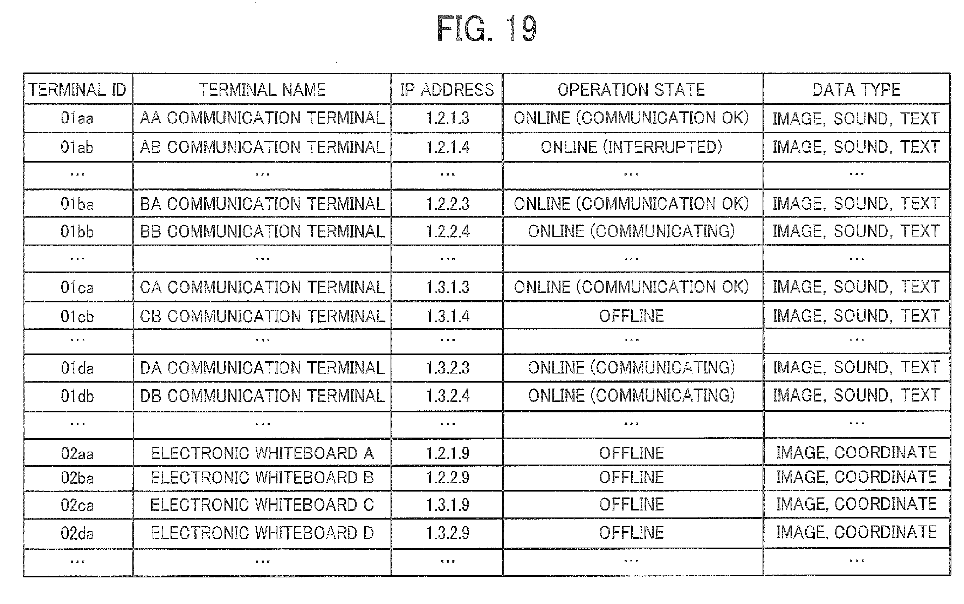

The memory 5000 stores a terminal management DB 5002, such as the terminal management table of FIG, 19. The terminal management table of FIG. 19 includes, for each one of the plurality of transmission terminals (communication terminal 10 and electronic whiteboard 20) managed by the transmission control system 50, the terminal ID for identifying the transmission terminal, a terminal name of the transmission terminal, an IP address of the transmission terminal, an operation state indicating a current operation state of the transmission terminal, and a data type that can be processed by the transmission terminal, in association with one another. The data type information is transmitted from each transmission terminal through the communication network 2. Examples of data that can be processed include image data, sound data, text data, and coordinate data. Examples of processing include reproducing data. For example, through reproducing the image data, the image is displayed onto the display 3 or the display 120. Through reproducing the sound data, the speaker 115 of the communication terminal 10 outputs sounds. Through reproducing the text data, contents of text is displayed onto the display 120. Through reproducing the coordinate data, stroke data is displayed onto the display 3. For example, the terminal management table of FIG. 19 indicates that the communication terminal 10aa has the terminal ID "01aa", the terminal name "AA conmunication terminal", the IP address "1.2.1.3", the operation state "online (communication OK), and the data types that can be processed include "image, sound, and text".

Further, in this example, the communication terminal 10 is not capable of processing the coordinate data to reproduce the stroke image, even when such coordinate data can be received. The electronic whiteboard 20 is not capable of processing the sound data to reproduce sounds, even when such sound data can be received.

The association information of FIG. 19 associates, for each one of the transmission terminals, data type information indicating one or more data types that can be processed by the transmission terminal, with the terminal ID of the transmission terminal. Alternatively, the association information of FIG. 19 may associate, for each one of data types, the terminal ID of each of one or more transmission terminals, with the data type. For example, the "image" data type may be associated with the terminal IDs of the terminals that can process such data type, such as "01aa", "01ab", etc. Similarly, the "coordinate" data type may be associated with the terminal IDs of the terminals that can process such data type, such as "02aa", "02ba", etc. In such case, the terminal ID and the data type are associated using a table, which is different from the terminal management table of FIG. 19.

### (Candidate list management table)

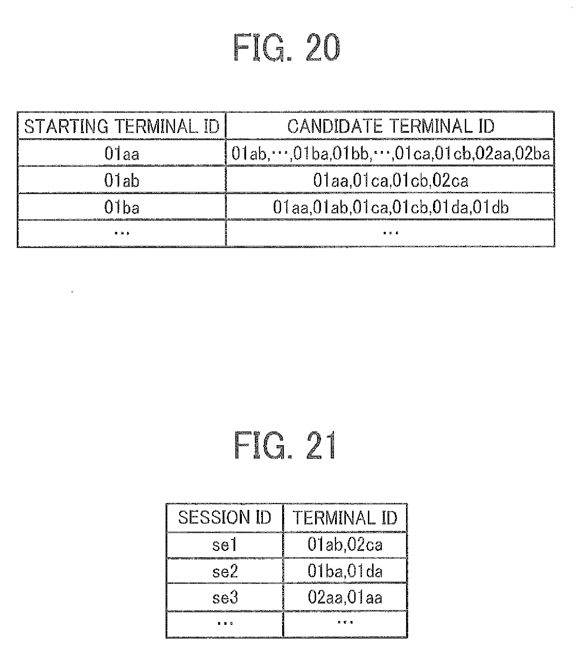

The memory 5000 further stores a candidate list management DB5003, such as a candidate list management table of FIG. 20. The candidate list management table stores, for each one of starting terminals capable of requesting to start communication such as video conference, the terminal ID of the starting terminal and a candidate counterpart terminal ID of each one of the candidate counterpart terminals that are registered as the terminal that can be requested by the starting terminal.

For example, the candidate list management table of FIG. 20 indicates that the starting terminal 10aa with the terminal ID "01aa" can request to start communication with a plurality of candidate counterpart terminals including the communication terminal 10ab with the terminal ID "01 ab", and the electronic whiteboard 20a with the terminal ID "02aa", etc. Any terminal may request the transmission control system 50 to add or delete the terminal ID of any candidate counterpart terminal.

### (Session management table)

The memory 5000 further stores a session management DB 5004, such as a session management table of FIG. 21 that stores information regarding sessions that are currently carried out. The session management table of FIG. 21 stores, for each session of communication among a plurality of transmission terminals (communication terminals 10 and electronic whiteboards 20), a session ID for identifying the session, and the terminal ID of each one of the transmission terminals communicating through that session in association with each other. For example, the session management table of FIG. 21 indicates that the communication terminal 10ab with the terminal ID "01ab" and the electronic whiteboard 20c with the terminal ID "02ca" communicate through the session with the session ID "sel".

### (Functional structure of transmission control system)

Referring back to FIG. 17, a functional structure of the transmission control system 50 is explained according to an example embodiment of the present invention.

The transmitter/receiver 51 transmits or receives various data or information to or from the other terminal, device, or system through the communication network 2.

The authenticator 52 searches the authentication management DB 5001 in the memory 5000 using the terminal ID and the password included in the login request received at the transmitter/receiver 51 as a search key, to determine whether the same pair of terminal ID and password is stored in the authentication management DB 5001 to authenticate the terminal that sends the login request.

The generator 53 generates a session ID to be used for communication.

The determiner 58 determines whether one or more data types indicated by the data type information, which is read out by the access control 59 from the terminal management DB 5002 match one or more data types indicated by data type information transmitted from the transmission terminal. Based on determination, the terminal management DB 5002 is updated.

The access control 59 stores various data in the memory 5000 or reads various data from the memory 5000,

### <Example operation>

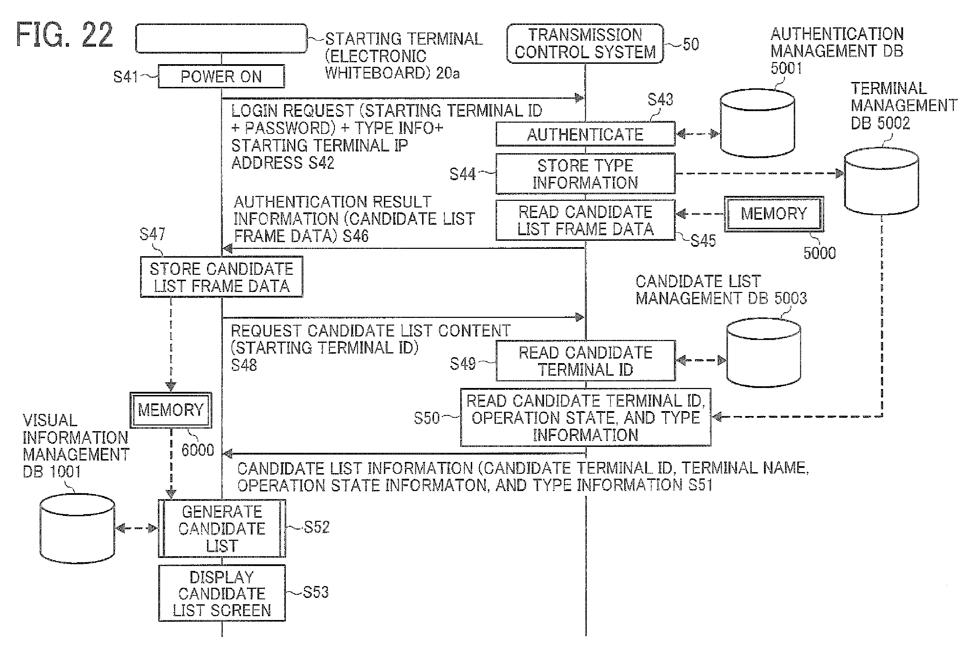

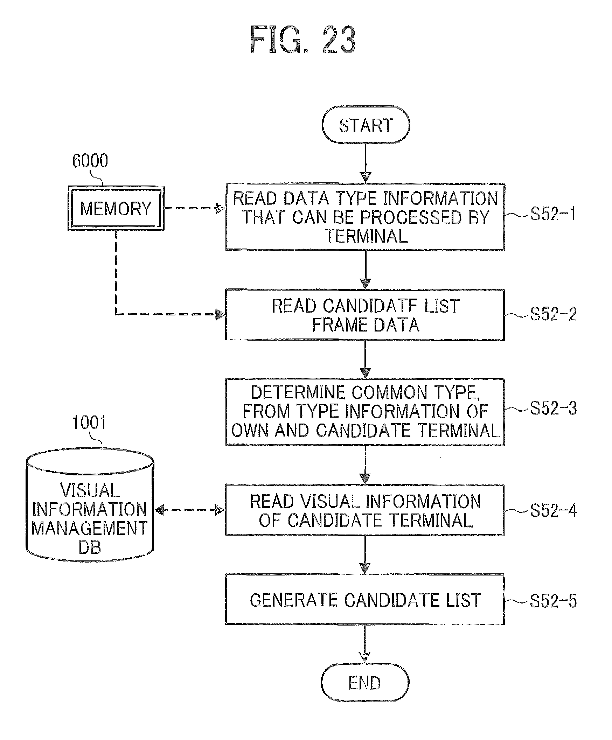

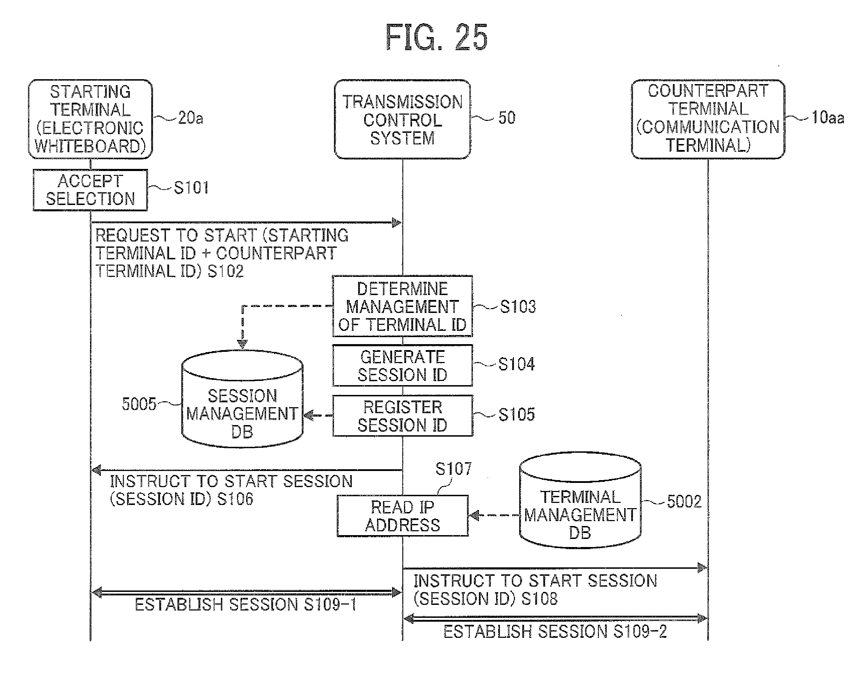

Referring now to FIGs. 22 to 25, example operation performed by the transmission system 1 of FIG. 1 is explained. FIG. 22 is a data sequence diagram illustrating operation of preparing for starting communication among the transmission terminals to transmit or receive contents data. FIG. 23 is a flowchart illustrating operation of generating a candidate list. FIG. 24 is an illustration of an example candidate list screen. FIG. 25 is a data sequence diagram illustrating operation of starting transmission or reception of contents data, performed after selection of a counterpart terminal.

In this example, it is assumed that the electronic whiteboard 20a (starting terminal) requests to start communication with the communication terminal 10aa (counterpart terminal). Before starting transmission or reception of contents data between the starting terminal and the counterpart terminal, various management information is transmitted or received as described below referring to FIGs. 22 to 25, for example, through the management data session "set" of FIG. 2.

At S41, as the user at the electronic whíteboard 20a turns on the power switch of the electronic whiteboard 20a, the electronic power is turned on.

In response to turning on of the power, at S42, the login request 63 of the electronic whiteboard 20a transmits a login request and data type information to the transmission control system 50 via the communication network 2. The transmission control system 50 receives the login request and the data type information at the transmitter/receiver 51. The login request includes a terminal ID for identifying the electronic whiteboard 20a serving as the starting terminal, and a password. The terminal ID and the password are read out by the access control 69 from the memory 6000, and transmitted to the transmitter/receiver 61. The data type information transmitted at S42 indicates a type of data that can be processed by the starting terminal (in this case, the electronic whiteboard 20a). The data type information is read by the access control 69 from the memory 6000.

Further, when receiving the login request from the electronic whiteboard 20a, the transmission control system 50 also receives the IP address of the electronic whiteboard 20a that sends the login request. In alternative to sending the login request in response to turning on of power, the electronic whiteboard 20a may send the login request at any other time such as in response to detection of input operation by the user with the electronic pen 4.

In alternative to reading the terminal ID and the password from the memory 6000, the electronic whiteboard 20a may request the user to input the terminal ID and/or the password with the electronic pen 4. Alternatively, the electronic whiteboard 20a may read the terminal ID and/or the password from a recording medium such as a subscriber identity module (SIM) card or a SD card that is connected to the electronic whiteboard 20a.

At S43, the authenticator 52 of the transmission control system 50 searches the authentication management table (FIG. 18) in the memory 5000 using the terminal ID and the password included in the login request that is received at the transmitter/receiver 51 as a search key to determine whether the same pair of terminal ID and password are stored in the authentication management DB 5001 to authenticate the electronic whiteboard 20a that sends the login request.

In this example, it is assumed that the authenticator 52 determines that the electronic whiteboard 20a is authenticated as a terminal that is authorized to login.

When it is determined that the authenticator 52 determines that the login request is received from the authenticated starting terminal, at S44, the access control 59 stores data type information that is received at S42, in the "data type" field in the terminal management table of FIG. 19 for a record of the authenticated starting terminal (electronic whiteboard 20a) in association with the terminal ID of the authenticated starting terminal.

At S45, the access control 59 reads candidate list frame data from the memory 5000. At S46, the transmitter/receiver 51 transmits authentication result information indicating the authentication result obtained by the authenticator 52, to the starting terminal that sends the login request (electronic whiteboard 20a) through the communication network 2. The electronic whiteboard 20a receives the authentication result information at the transmitter/receiver 61. The authentication result information includes the candidate list frame data that is read at S44.

At S47, the access control 69 of the starting terminal (electronic whiteboard 20a) stores the candidate list frame data that is received at S46 in its internal memory.

At S48, the starting terminal (electronic whiteboard 20a), which receives the authentication result information indicating that the starting terminal is authenticated, causes the transmitter/receiver 61 to request for contents of the candidate list ("candidate list request"), to the transmission control system 50 through the communication network 2. The transmission control system 50 receives the candidate list request at the transmitter/receiver 51. The candidate list request includes the terminal ID of the starting terminal (electronic whiteboard 20a).

At S49, the access control 59 of the transmission control system 50 searches the candidate list management table (FIG. 20) using the terminal ID "02aa" of the starting terminal (electronic whiteboard 20a) that is received at S48 as a search key to obtain the terminal ID of each one of candidate counterpart terminals that is registered for the starting terminal.

At S50, the access control 59 searches the terminal management table (FIG. 19) using the terminal ID of the candidate counterpart terminal that is read at S49 as a search key to obtain the terminal name, the operation state, and the data type information of each one of the candidate counterpart terminals.

At S51, the transmitter/receiver 51 of the transmission control system 50 sends the candidate list content information ("candidate list information") to the starting terminal (electronic whiteboard 20a) through the communication network 2. The starting terminal (electronic whiteboard 20a) receives the candidate list information at the transmitter/receiver 11. The candidate list information includes the terminal ID, the terminal name, the operation state, and the data type information of each one of the candidate counterpart terminals, which are read at S49 and S50.

At S52, the generator 67 of the starting terminal (electronic whiteboard 20a) generates a candidate list, using the candidate list frame data stored in the memory 6000 at S47, and candidate list information that is received at S51. Referring to FIG. 23, operation of generating a candidate list is explained according to an example embodiment of the present invention.

Referring to FIG. 23, at S52-1, the access control 69 reads the data type information indicating one or more types of data that can be processed by the starting terminal.

At S52-2, the access control 69 reads the candidate list frame data from the memory 6000.

At S52-3, the determiner 58 determines, for each one of candidate counterpart terminals, one or more common data types that are common to the data type information of the starting terminal that is read at S52-1 and the data type information of the candidate counterpart terminal that is received at S51. For example, when the starting terminal (electronic whiteboard 20a) has data type information indicating "image" and "coordinate", and the candidate counterpart terminal 10aa has data type information indicating "image", "sound", and "text", the common data type that is common to the electronic whiteboard 20a and the terminal 10aa is "image".

At S52-4, the access control 69 searches the visual information management table (FIG. 10) using the operation state information that is received at S51 as a search key to obtain the visual information associated with the operation state.

At S52-5, the generator 67 generates a candidate list, specifically, by adding the visual information obtained at S52-4, the terminal ID, the terminal name, and the data type information of the candidate counterpart terminals that are received at S51, to the candidate list frame data read at S52-2. In this example, for the data type information of each candidate counterpart terminal, the data type that is determined to be common at S52-3 is displayed differently than the data type that is determined to be different (not common) at S52-3.

Referring back to FIG. 22, at S53, the superimposed image generator 36 of the image processor 30 causes the display 3 to display the candidate list generated by the generator 67 via the superimposed image display 28.

FIG. 24 illustrates an example candidate list screen, which may be displayed on the display 3. The candidate list screen of FIG. 24 includes, for each one of candidate counterpart terminals, the icon indicating the operation state of the candidate counterpart terminal, the terminal ID of the candidate counterpart terminal, the terminal name of the candidate counterpart terminal, and the data type information indicating a data type that can be processed by the candidate counterpart terminal. The terminal name of the candidate counterpart terminal, which is received at S51 from the transmission control system 50, may be displayed as a "counterpart name" or a "destination name" on the screen of FIG. 24.

The above-described steps of S41 to S53 of FIG. 22 may be performed by the communication terminal 10 in a substantially similar manner, when the communication terminal 10 serves as the starting terminal. In such case, at S53, the display control 16 causes the display 120 to display the candidate list such as the candidate list screen of FIG. 24.

As illustrated in FIG. 24, the candidate list screen displays, as a type of data that can be processed, "image", "sound", "coordinate", and "text". In this example, the data type that can be commonly processed both by the electronic whiteboard 20a and the communication terminal 10 is "image", and all other data types "sound" "coordinate" and "text" are not commonly processed. To illustrate this more clearly, in case the starting terminal is the electronic whiteboard 20, as illustrated in FIG. 24, for the candidate counterpart terminal that is the communication terminal 10, the character "image" is displayed in bold or darker color, while the characters "sound" "coordinate" and "text" are each displayed in lighter color. With this appearance, the common data type and the non-common data type can easily be distinguished.

Further, in this example, the data types that can be commonly processed by the electronic whiteboard 20a and the other electronic whiteboard 20 are "image" and "coordinate", and all other data types "sound" and "text" are not commonly processed. To illustrate this more clearly, in case the stating terminal is the electronic whiteboard 20, as illustrated in FIG. 24, for the candidate counterpart terminal that is the electronic whiteboard 20, the characters "image" and "coordinate" are displayed in bold or darker color, while the characters "sound" and "text" are each displayed in lighter color. With this appearance, the common data type and the non-common data type can be easily distinguished.

Referring now to FIG. 25, operation of preparing for starting transmission or reception of contents data, which is performed after selection of a counterpart terminal, is explained according to an example embodiment of the present invention.

At S101, the coordinate detector 22 of the starting terminal (electronic whiteboard 20a) receives user selection of a counterpart terminal (in this example, the communication terminal 10aa) from a list of candidate counterpart terminal displayed on the candidate list screen of FIG. 24.

At S102, the transmitter/receiver 61 of the starting terminal (electronic whiteboard 20a) sends a communication start request that requests to start transmission or reception of contents data such as image data, to the transmission control system 50 through the communication network 2. The transmission control system 50 sends the communication start request at the transmitter/receiver 51. The communication start request includes the terminal ID of the starting terminal (electronic whiteboard 20a) and the terminal ID of the selected counterpart terminal (communication terminal 10aa).

At S103, the determiner 58 determines whether the terminal ID of the counterpart terminal that is received at S102 is stored in the session management table (FIG. 21) to determine whether the selected counterpart terminal is participating in a session. In this example, it is assumed that the session management table does not store the terminal ID of the selected counterpart terminal. In such case, at S104, the generator 53 generates a session ID.

At S105, the access control 59 creates a record for a session to be started in the session management table (FIG. 21), which includes the session ID generated at S104 in association with the terminal IDs of the starting terminal and the counterpart terminal that are received at S102. For example, as illustrated in FIG. 21, the session management table adds a record that associates the session ID "se3" with the terminal ID "02aa" of the starting terminal (electronic whiteboard 20a) and the terminal ID "01aa" of the counterpart terminal, (communication terminal 10aa).

At S106, the transmitter/receiver 51 sends an instruction to start a session to the starting terminal (electronic whiteboard 20a), which includes the session ID generated at S104. The starting terminal (electronic whiteboard 20a) receives the session start instruction at the transmitter/receiver 61.

At S107, the access control 69 searches the terminal management table (FIG. 19) using the terminal ID of the counterpart terminal (communication terminal 10aa) that is received at S102 as a search key to obtain the IP address associated with the counterpart terminal.

At S108, the transmitter/receiver 51 transmits an instruction to start a session to the counterpart terminal using the IP address read at S107, which includes the session ID generated at S103. The counterpart terminal (communication terminal 10aa) receives the session start instruction at the transmitter/receiver 11.

At S109-1 and S109-2, the starting terminal (electronic whiteboard 20a) and the counterpart terminal (communication terminal 10aa) establish a communication session through the communication control system 50, to start communication with each other.

As described above, the common data type indicating a type of data that can be commonly processed by the starting terminal and the candidate counterpart terminal, and the non-common data type indicating a type of data that is not commonly processed by the starting terminal and the candidate counterpart terminal are displayed differently. With this information, the user can instantly recognize the type of data that can be processed by the counterpart terminal, before starting communication with the counterpart terminal.

For example, with this information, the user is discouraged from using the uncommon data type, when communicating with the counterpart terminal. In another example, if the data type that the user wants to use for communication cannot be processed by the counterpart terminal, the user may request the user at the other end to change a transmission terminal. In another example, with information indicating the type of data that can be commonly processed by the starting terminal and the counterpart terminal, the user is discouraged from configuring data related to processing of a specific type of data, if such specific type of data is not commonly processed by the starting terminal and the counterpart terminal.

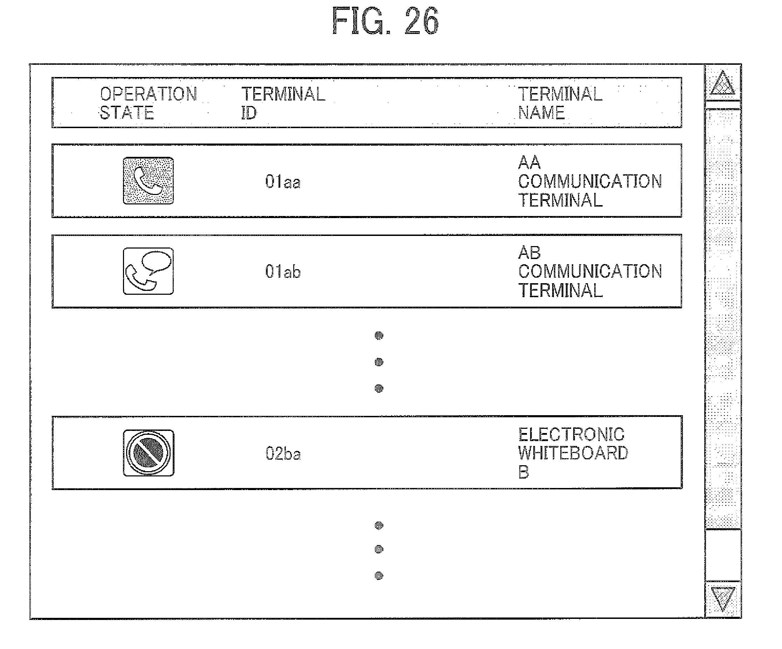

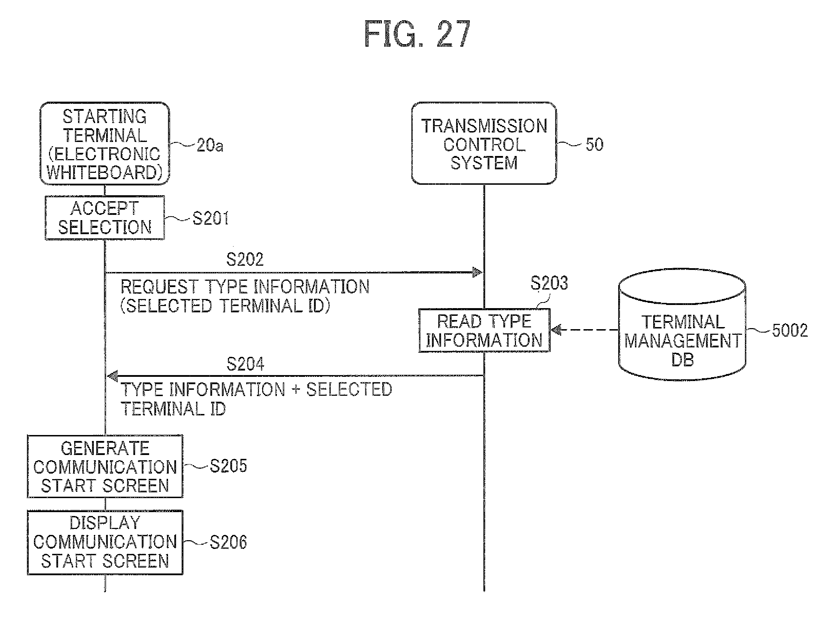

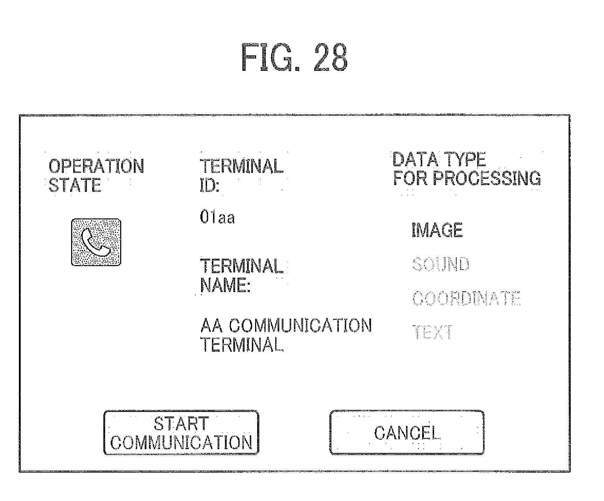

The above-described transmission system of FIG. 1 may be implemented in various other ways, for example, as described below referring to FIGs. 26 to 28. FIG. 27 is a data sequence diagram illustrating operation of displaying a communication start screen according to an example embodiment of the present invention. FIG. 26 is an illustration of an example candidate list screen. FIG. 28 is an illustration of an example communication start screen.

In the above-described example referring to FIG. 22, the transmission control system 50 obtains data type information of the candidate counterpart terminal at S51, in response to the login request received from the starting terminal at S42. Alternatively, the transmission control system 50 may not obtain the data type information at S51. In such case, as illustrated in FIG. 26, the candidate list screen that is displayed at S53 does not include data type information that can be processed by the candidate counterpart terminal. When the starting terminal receives user selection that selects a counterpart terminal, from a list of candidate counterpart terminals on the candidate list screen, the starting terminal requests for data type information of the selected counterpart terminal, to the transmission control system 50. Based on the obtained data type information, the starting terminal displays a communication start screen of FIG. 28, which additionally includes the data type information of the selected counterpart terminal.

In operation, when the communication terminal 10 is the starting terminal, the generator 17 generates the candidate list screen of FIG. 26 and the communication start screen of FIG. 28. When the electronic whiteboard 20 is the starting terminal, the generator 67 generate the candidate list screen of FIG. 26 and the communication start screen of FIG. 28.

Referring now to FIGs. 27 and 28, operation of displaying the communication start screen of FIG. 28 is explained according to an example embodiment of the present invention.

In this example, the transmission control system 50 does not read data type information of each one of the candidate counterpart terminals from the terminal management table (FIG. 19) at S50, such that the data type information is not transmitted at S51. At S53, the starting terminal (electronic whiteboard 20a) displays the candidate list screen of FIG. 26 at S53, which includes no data type information. The user at the starting terminal (electronic whiteboard 20a) is not able to know what type of data can be transmitted or received to or from the candidate counterpart terminal for further processing.

Referring now to FIGs. 27 and 28, operation to be performed after displaying the candidate list screen of FIG. 26 is explained according to an example embodiment of the present invention.

At S201, the starting terminal (electronic whiteboard 20a) receives user selection that selects a counterpart terminal, from among candidate counterpart terminals on the candidate list screen of FIG, 26. In this example, it is assumed that the communication terminal 10aa is selected as a counterpart terminal, using the electronic pen 4 or the user's hand H.

At S202, the transmitter/receiver 61 of the starting terminal (electronic whiteboard 20a) requests to send data type information to the transmission control system 50. The transmission control system 50 receives the data type request at the transmitter/receiver 51. The data type request includes the terminal ID of the selected counterpart terminal (communication terminal 10aa).

At S203, the access control 59 of the transmission control system 50 searches the terminal management table (FIG. 19) using the terminal ID of the selected counterpart terminal that is received at S202, as a search key, to obtain the data type information associated with the terminal ID of the counterpart terminal.

At S204, the transmitter/receiver 51 transmits the terminal ID of the selected counterpart terminal and the data type information indicating a type of data that can be processed by the selected counterpart terminal, to the starting terminal (electronic whiteboard 20a). The starting terminal (electronic whiteboard 20a) receives the terminal ID and the data type information of the selected counterpart terminal at the transmitter/receiver 61.

At S205, the generator 67 of the starting terminal (electronic whiteboard 20a) generates a communication start screen such as that of FIG. 28, using the candidate list information and the data type information received at S204.

At S206, the superimposed image generator 36 of the image processor 30 causes the display 3 to display the communication start screen generated by the generator 67 onto the display 3 through the superimposed image display 28.

As illustrated in FIG. 28, the communication start screen includes visual information indicating the operation state (icon), the terminal ID, the terminal name (counterpart name), the data type that can be processed, the "start communication" key, and the "cancel" key. The terminal name, which is obtained at the transmission control system 50, may be displayed as the counterpart name or the destination name on the communication start screen.

The above-described operation of FIG. 28 may be performed by the communication terminal 10 in a substantially similar manner, when the communication terminal 10 serves as the starting terminal. In such case, at S206, the display control 16 causes the display 120 to display the communication start screen.

As described above referring to FIG. 24, a type of data that can be commonly processed by the electronic whiteboard 20 and the communication terminal 10 is only "image data". All other data types "sound" "coordinate" and "text" are thus non-common data type. Accordingly, as illustrated in FIG. 28, the communication start screen indicates that, when the starting terminal is the electronic whiteboard and the candidate counterpart terminal is the communication terminal, the character "image" is displayed in bold or darker color. When the "start communication" key is selected by the user, the starting terminal (electronic whiteboard 20a) starts communication with the counterpart terminal having the terminal ID shown on the communication start screen. When the "cancel" key is selected by the user, the starting terminal (electronic whiteboard 20a) does not start communication, and switches a display from the communication start screen of FIG. 28 back to the candidate list screen of FIG. 26.

In the above-described example referring to FIGs. 26 to 28, the transmission terminal only receives data type information of the selected terminal that is selected by the user for display. This reduces processing load in generating the candidate list screen.

The transmission control system 50, the program providing system 90, and the maintenance system 100 in the above-described embodiments may be implemented by a single computer or a plurality of computers to which divided portions (functions) are arbitrarily allocated. In addition, in the case where the program providing system 90 is configured by a single computer, a program transmitted by the program providing system 90 may be separately transmitted in units of a plurality of modules, or may be transmitted in its entirety. Further, in the case where the program providing system 90 is configured by a plurality of computers, a program may be divided into a plurality of modules, and the modules may be individually transmitted from the respective computers.

The transmission system may be implemented by any desired communication system having a plurality of transmission terminals that can communicate with one another. Examples of transmission system include, but not limited to, videoconference system, teleconference system, telephone system including a portable telephone system, text chat system, and whiteboard sharing system. The transmission system may be implemented by a dedicated terminal such as the above-described communication terminal 10, game machine, personal computer, or portable communication terminal. Examples of portable communication terminal include, but not limited to, a smart phone, portable phone, tablet, wearable computer terminal, and robot. The wearable computer terminal may be any wearable matter provided with a communication device, such as a watch, eye glasses, head-up display, ear phones, cap, hat, gloves, shoes, bag, etc.

Further, any one of the above-described programs may be stored in any desired recording medium such as CD-ROM in a format installable or executable by the general-purpose computer, for example, for distribution.

In the above-described examples, as illustrated in FIG. 17, the authentication management DB 5001, the terminal management DB 5002, the candidate list management DB 5003, and the session management DB 5004 are stored in the memory 5000 of the transmission control system 50. Alternatively, at least one of the authentication management DB 5001, the terminal management DB 5002, the candidate list management DB 5003, and the session management DB 5004 may be stored in a memory of the other server (system) that is separate from the transmission control system 50. In such case, the access control 59 of the transmission control system 50 reads or writes various data through accessing the other server (computer, system) via the transmitter/receiver 51.

In the above-described examples, the terminal ID is used as an example of identification information. Alternatively, a user ID for identifying the user of the terminal may be used as long as the terminal can be identified.

Moreover, in the above-described examples, the display control 16 or the superimposed image generator 36 displays the data type that can be commonly processed by the starting terminal and the counterpart terminal, differently than the data type that cannot be commonly processed by the starting terminal and the counterpart terminal. Alternatively, the display control 16 or the superimposed image generator 36 may not display the data type that cannot be commonly processed by the starting terminal and the counterpart terminal, to guide the user to only select the data type that is common to both sides to facilitate communication.

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of this disclosure and appended claims.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

In one example, the present invention may reside in a transmission terminal capable of communicating with a counterpart transmission terminal, which includes: a memory that stores first data type information indicating one or more data types that can be processed by the transmission terminal; a receiver that receives second data type information indicating one or more data types that can be processed by a candidate counterpart terminal through a network; a processor that determines one or more common data types that are common to the first data type information and the second data type information to obtain the common data types of the candidate counterpart terminal that can be processed by the transmission terminal; and a display that displays the common data types of the candidate counterpart terminal differently than other data types of the candidate counterpart terminal that cannot be processed by the transmission terminal.

In one example, the display displays the common data types of the candidate counterpart terminal for each one of one or more candidate counterpart terminals that the transmission terminal is capable of starting communication, as a part of a candidate list that lists the one or more candidate counterpart terminal from which the counterpart transmission terminal is selected. In such case, the transmission terminal includes a transmitter that transmits a request for sending the candidate list to a relay system through the network, and the receiver receives the second data type information for each one of the one or more candidate counterpart terminals from the relay system in response to the request.

In such case, the candidate list additionally includes, for each one of the one or more candidate counterpart terminals, at least one of a terminal name of the candidate counterpart terminal, operation state information indicating an operation state of the candidate counterpart terminal, and identification information for identifying the candidate counterpart terminal or a user at the candidate counterpart terminal. The display displays the common data types of the candidate counterpart terminal, in association with the at least one of the terminal name, the operation state information, and the identification information of the candidate counterpart terminal.

In another example, the display displays the common data types of the candidate counterpart terminal for a selected candidate counterpart terminal that is selected, to be the counterpart transmission terminal, from a candidate list that lists one or more candidate counterpart terminals that the transmission terminal is capable of starting communication. In such case, the transmission terminal includes a transmitter that transmits a request for sending the second type information of the selected candidate counterpart terminal to a relay system through the network, and the receiver receives the second data type information of the selected candidate counterpart terminal from the relay system in response to the request. For example, the display further displays a communication start key that causes the transmission terminal to start communication with the selected candidate counterpart terminal, in addition to the common data types of the selected candidate counterpart terminal.

## Claims

1. A method of communicating with a counterpart transmission terminal (10, 20), performed by a transmission terminal (10, 20), the method comprising:
storing, in a memory (1000), first data type information indicating one or more data types that can be processed by the transmission terminal (10, 20);
receiving (S51) second data type information indicating one or more data types that can be processed by a candidate counterpart terminal (10, 20) through a network (2);
determining (S52) one or more common data types that are common to the first data type information and the second data type information to obtain the common data types of the candidate counterpart terminal (10, 20) that can be processed by the transmission terminal (10, 20); and
displaying (S53), on a display (120, 3), the common data types of the candidate counterpart terminal (10, 20) differently than other data types of the candidate counterpart terminal (10, 20) that cannot be processed by the transmission terminal (10, 20).

2. The method of claim 1, wherein the displaying (S53) displays the common data types of the candidate counterpart terminal for each one of one or more candidate counterpart terminals that the transmission terminal is capable of starting communication, as a part of a candidate list that lists the one or more candidate counterpart terminals from which the counterpart transmission terminal is selected.

3. The method of claim 2, further comprising:
transmitting (S48) a request for sending the candidate list to a relay system (50) through the network (2),
wherein the receiving (S51) receives the second data type information for each one of the one or more candidate counterpart terminals (10, 20) from the relay system (50) in response to the request.

4. The method of claim 2 or 3, wherein
the candidate list additionally includes, for each one of the one or more candidate counterpart terminals (10, 20), at least one of a terminal name of the candidate counterpart terminal (10, 20), operation state information indicating an operation state of the candidate counterpart terminal (10, 20), and identification information for identifying the candidate counterpart terminal (10, 20) or a user at the candidate counterpart terminal (10, 20), and
the displaying (S53) displays the common data types of the candidate counterpart terminal (10, 20), in association with the at least one of the terminal name, the operation state information, and the identification information of the candidate counterpart terminal (10, 20).

5. The method of claim 1, wherein
the displaying (S53) displays the common data types of the candidate counterpart terminal (10, 20) for a selected candidate counterpart terminal (10, 20) that is selected, to be the counterpart transmission terminal, from a candidate list that lists one or more candidate counterpart terminals (10, 20) that the transmission terminal (10, 20) is capable of starting communication.

6. The method of claim 5, further comprising:
transmitting (S202) a request for sending the second type information of the selected candidate counterpart terminal (10, 20) to a relay system through the network,
wherein the receiving (S204) receives the second data type information of the selected candidate counterpart terminal (10, 20) from the relay system in response to the request.

7. The method of claim 5 or 6, further comprising:
displaying (S206), on the display (120, 3), a communication start key that causes the transmission terminal (10, 20) to start communication with the selected candidate counterpart terminal (10, 20), together with the common data types of the selected candidate counterpart terminal (10, 20).

8. The method of any one of claims 1 to 7, wherein the common data types of the candidate counterpart terminal (10, 20) are displayed in display format different than that of the other data types of the candidate counterpart terminal (10, 20).

9. The method of any one of claims 1 to 7, wherein only the common data types of the candidate counterpart terminal (10, 20), except for the other data types, are displayed.

10. A transmission terminal (10, 20) configured to perform the method of any one of claims 1 to 9.

11. A transmission system comprising:
the transmission terminal (10, 20) of claim 10; and
a relay system (50) configured to communicate with the transmission terminal (10. 20) through the network (2), the relay system (50) including:
a memory (5002) that stores, for each one of a plurality of transmission terminals (10, 20) managed by the relay system (50), the second data type information indicating one or more data types that can be processed by the transmission terminal (10, 20); and
a memory (5003) that stores, for each one of the plurality of transmission terminals (10, 20) managed by the relay system (50), a candidate list indicating one or more candidate counterpart terminals (10, 20) that the transmission terminal (10, 20) is capable of starting communication,
wherein the relay system (50) transmits the second data type information of the candidate counterpart terminal that is registered for the transmission terminal (10, 20), to the transmission terminal (10, 20) through the network (2).

12. The transmission system of claim 11, further comprising:
the counterpart transmission terminal (10, 20), which is selected from among the one or more candidate counterpart terminals (10, 20) to start communication with the transmission terminal (10, 20),
wherein the transmission terminal (10, 20) and the counterpart transmission terminal (10, 20) are different in data processing capability.

13. A transmission system comprising:
the transmission terminal (10, 20) of claim 10; and
the display (120, 3) connected to the transmission terminal (10, 20) connected to the transmission terminal to display information regarding the candidate counterpart terminal for the transmission terminal, the information displaying the common data types of the candidate counterpart terminal differently than other data types of the candidate counterpart terminal that cannot be processed by the transmission terminal.

14. A carrier means (102, 103, 104, 106) carrying computer readable code for controlling a computer (101) to carryout the method of any one of claims 1 to 9.
